Europäisches Patentamt

European Patent Office

Office européen des brevets

(19)

(11) **EP 1 541 295 A1**

(12) **EUROPEAN PATENT APPLICATION**
published in accordance with Art. 158(3) EPC

(43) Date of publication:
**15.06.2005 Bulletin 2005/24**

(51) Int Cl.⁷: **B25J 5/00**, B25J 13/08,
G05D 1/02

(21) Application number: **03792808.2**

(22) Date of filing: **22.08.2003**

(86) International application number:
**PCT/JP2003/010651**

(87) International publication number:
**WO 2004/018159 (04.03.2004 Gazette 2004/10)**

(84) Designated Contracting States:
**AT BE BG CH CY CZ DE DK EE ES FI FR GB GR
HU IE IT LI LU MC NL PT RO SE SI SK TR**

(30) Priority: **26.08.2002 JP 2002245614**

(71) Applicant: **Sony Corporation
Tokyo 141-0001 (JP)**

(72) Inventors:
• **GUTMANN, Steffen, c/o SONY CORPORATION
Tokyo 141-0001 (JP)**
• **FUKUCHI, Masaki, c/o SONY CORPORATION
Tokyo 141-0001 (JP)**

(74) Representative: **Pilch, Adam John Michael
D Young & Co
120 Holborn
London EC1N 2DY (GB)**

(54) **ENVIRONMENT IDENTIFICATION DEVICE, ENVIRONMENT IDENTIFICATION METHOD, AND ROBOT DEVICE**

(57)     An environment identifying apparatus (400) is adapted to be mounted in a robot apparatus that moves in an identifiable unique environment in which a plurality of landmarks are located so as to identify the current environment by means of a plurality of registered environments. The environment identifying apparatus comprises an environment map building section (402) for recognizing the landmarks in the current environment, computing the movement/state quantity of the robot apparatus itself and building an environment map of the current environment containing information on the positions of the landmarks in the current environment on the basis of the landmarks and the movement/state quantity, an environment map storage section (403) having a data base of registered environment maps containing positional information on the landmarks and environment IDs, an environment identifying section (404) for identifying the current environment on the basis of the degree of similarity between the environment map of the current environment and each of the registered environment maps and an environment exploring section (405) for exploring a new environment.

FIG.5

**Description**

Technical Field

This invention relates to an apparatus and a method for identifying the environment in which a mobile body is moving, a program, a storage medium and also to a robot apparatus carrying such an environment identifying apparatus.

This application claims priority of Japanese Patent Application No. 2002-245614, filed on August 26, 2002, the entirety of which is incorporated by reference herein.

Background Art

Machine apparatus that are driven to move like a man (living creature) by means of electric or magnetic actions are referred to as "robots". Robots became popular in Japan in the late 1960s, although most of them are so-called industrial robots including manipulators and transfer robots developed for the purpose of performing unmanned automatic operations for manufacturing products in factories.

In recent years, commercial robots have been developed to support human activities as partners with people in various scenes in housing environments and in other scenes of daily human life. Unlike industrial robots, such commercial robots are provided with an ability of learning by themselves how to adapt them to people with different personalities and different environments in various aspects of daily life of men. For example, "pet-type" robots designed to mimic physical mechanisms and motions of four-footed animals such as dogs and cats and "humanoid robots" designed by using the physical mechanisms and motions of men who stand erect and walks on two feet as models have already been practically put to use.

Such robot apparatus can behave in various different ways to entertain people if compared with industrial robots and hence they are sometimes called as entertainment robots. Furthermore, some of such robots can autonomously behave, responding to externally given information and the internal state thereof.

Meanwhile, it is important for autonomous robots to recognize the environment surrounding the robot, lays a plan on the route to follow and moves according to the plan. Conventionally, mobile robot apparatus can recognize the environment in which they move and holds a map of the entire environment, which will be updated to reflect movement, if small, and changes in the attitude of the robot apparatus.

A navigation system for a robot holding an environment map is disclosed in United States Patent No. 5,363,305 ("Navigation System for a Mobile Robot") (to be referred to as the known technique, hereinafter). According to the known technique, the robot apparatus stores an environment map in which landmarks are located and evaluates the reliability of the map each time when the environment changes by comparing the stored environment map and the observed current environment and counting the number of the landmarks that agree before and after the environmental change. If a landmark that is not found on the stored environment map is observed, the environment map is updated by adding information on the newly observed landmark.

However, the known technique takes a given environment and draws a map of the environment so as to navigate itself or identifies its own position in the environment. In other words, the known technique is useful for a robot that is designed to move in a limited environment such as a transfer robot in a factory or a guide robot in a museum. However, the known technique is accompanied by problems as described below when it is applied to an entertainment robot. Because an entertainment robot needs to do activities in a home environment or the like, there may frequently arise situations where it is difficult for the robot to identify its own position. For example, the power supply of the robot may be suspended and the robot may be carried to some other room.

Assume here that the user of a robot apparatus lives in Tokyo and his or her house has room A on the ground floor and room B on the first floor, while a relative of the user lives in Osaka and the relative's house has room C. Also assume that the robot apparatus does activities in the room A during the daytime but brought to the room B at night and to the room C in Osaka in the summer vacation so as to do activities in the room C. Since the robot apparatus cannot actively move from the room A to the room C, the power supply of the robot may be suspended and transferred from Tokyo to Osaka. Under such circumstances, it is impossible for the robot to acquire the physical relationship between the room A and the room C.

Thus, with the known technique, if the robot is transferred into a physically separated different environment, it cannot identify its own position by itself and hence it is necessary to explicitly specify the changes in the environment of the robot for the robot by some means or other.

If it is possible for the robot to acquire all the physical relationship between the rooms and express it by a single environment map, the robot is forced to handle a huge volume of information at a time. Such an operation is not suited to a robot apparatus whose resources are limited and problems may arise due to the volume of computations the robot is required to deal with.

Disclosure of the Invention

In view of the above identified problems of the prior art, it is therefore the object of the present invention to provide an apparatus, a method and a program for quickly identifying the environment in which a mobile body is moving, taking the limited computation resources and memory resources in the mobile body into consideration, a storage medium storing such a program and also a robot apparatus carrying such an environment identifying apparatus.

In an aspect of the present invention, the above object is achieved by providing an environment identifying apparatus to be used by a mobile body to identify the environment containing one or more than one landmarks located therein, while moving in the environment, the apparatus comprising: an environment map building means for building an identifiable unique environment map by means of the location or the number of one or more than one landmarks according to the result of observation of the one or more than one landmarks and the movement/state quantity of the mobile body; an environment map storage means for storing a plurality of environment maps as registered environment maps; and an environment identifying means for determining if the current environment is identical with the environment indicated by the registered environment maps by comparing the registered environment maps stored in the environment map storage means and the current environment map built by the environment map building means.

In another aspect of the present invention, there is provided an environment identifying method to be used by a mobile body to identify the environment containing one or more than one landmarks located therein, while moving in the environment, the method comprising: an environment map building step of building an identifiable unique environment map by means of the location or the number of one or more than one landmarks according to the result of observation of the one or more than one landmarks and the movement/state quantity of the mobile body; and an environment identifying step of determining if the current environment is identical with the environment indicated by a plurality of registered environment maps stored in an environment map storage means as registered environment maps by comparing the registered environment maps and the current environment map built in the environment map building step.

In still another aspect of the present invention, there is provided a computer program for having a computer to execute the above described environment identifying process. In still another aspect of the present invention, there is provided a storage medium storing such a computer program as computer readable program.

Thus, when a robot apparatus builds an environment map of the current environment, the robot apparatus can quickly identify a plurality of environments that are physically separated from each other (e.g., the room A and the room B that are physically separated from each other) because it comprises an environment map building means for building an identifiable unique environment map for each environment by means of the location or the number of one or more than one landmarks and an environment identifying means for determining if the current environment is identical with the environment indicated by the registered environment maps by comparing the built environment map and the registered environment maps stored in the environment map storage means thereof. Therefore, the load of computations of the robot apparatus is smaller than the load applied to it if the robot apparatus holds a large environment map covering all the environments. Additionally, it is not necessary for the robot apparatus to know the relative position relationship of the different environments. Still additionally, it is possible for the robot apparatus to identify the current environment without recognizing all the landmarks if a certain amount of information is given to it. Thus, it is possible for the robot apparatus to quickly identify the current environment by building an environment map for each environment and dynamically comparing the environment map of the current environment with the group of environment maps stored in the storage means. It is also possible for the robot apparatus to identify its own position in each environment.

In still another aspect of the present invention, there is provided a robot apparatus adapted to move in an environment containing one or more than one landmarks located therein, the robot apparatus comprising: an environment map building means for building an identifiable unique environment map by means of the location or the number of one or more than one landmarks according to the result of observation of the one or more than one landmarks and the movement/state quantity of the mobile body; an environment map storage means for storing a plurality of environment maps as registered environment maps; and an environment identifying means for determining if the current environment is identical with the environment indicated by the registered environment maps by comparing the registered environment maps stored in the environment map storage means and the current environment map built by the environment map building means.

Thus, according to the invention, areas that can be uniquely identified by means of landmarks are defined as so many environments and a robot apparatus stores the environment maps showing the environments and compares the current environment map with those it sores. With this arrangement, the quantity of data necessary for each environment is relatively small so that the robot apparatus can quickly and efficiently identifies the environment in which it is moving if the computation resources and the storage resources of the robot apparatus are limited.

Other objects of the invention and specific advantages of the present invention will become apparent from the description given below by referring to the accompanying drawings that illustrate preferred embodiments of the invention.

Brief Description of the Drawings

FIG. 1 is a schematic perspective view of an embodiment of the present invention that is a humanoid type bipedal locomotion robot apparatus, showing its outer appearance;

FIG. 2 is a schematic perspective view of another embodiment of the present invention that is a tetrapodal locomotion robot apparatus, showings it outer appearance;

FIG. 3 is a schematic block diagram of an embodiment of robot apparatus according to the invention;

FIG. 4 is a schematic block diagram of the software for driving an embodiment of robot apparatus according to the invention, illustrating the configuration thereof;

FIG. 5 is a schematic block diagram of an embodiment of environment identifying system according to the invention;

FIG. 6 is a schematic illustration of an example of environment maps that are managed by the embodiment of environment identifying system of FIG. 5;

FIG. 7A is a schematic illustration of a robot apparatus exploring in an environment and FIG. 7B is a schematic illustration of a landmark of the embodiment of FIG. 5;

FIG. 8 is a schematic illustration of landmarks that can be used for the purpose of the present invention;

FIG. 9 is a flow chart of the environment identifying method that an embodiment of environment identifying apparatus according to the invention uses;

FIG. 10 is a schematic illustration of an embodiment where landmarks are located;

FIG. 11 is a schematic illustration of an environment map built by a robot apparatus without taking its own motion into consideration;

FIG. 12 is a schematic illustration of an environment map built by a robot apparatus by taking its own motion into consideration;

FIG. 13 is a schematic illustration of an extended Kalman filter model;

FIG. 14A and FIG. 14B are flow charts of a method of building an environment map respectively when a robot apparatus observes its own motion and when it observes a landmark;

FIG. 15 is a schematic illustration of an environment map built by a robot apparatus by exploring in an environment and observing positions of landmarks;

FIG. 16 is a schematic illustration of another environment map built by a robot apparatus by exploring in an environment and observing positions of landmarks;

FIG. 17 is a flow chart of the environment identifying method that the environment identifying section of an embodiment of robot apparatus according to the invention uses;

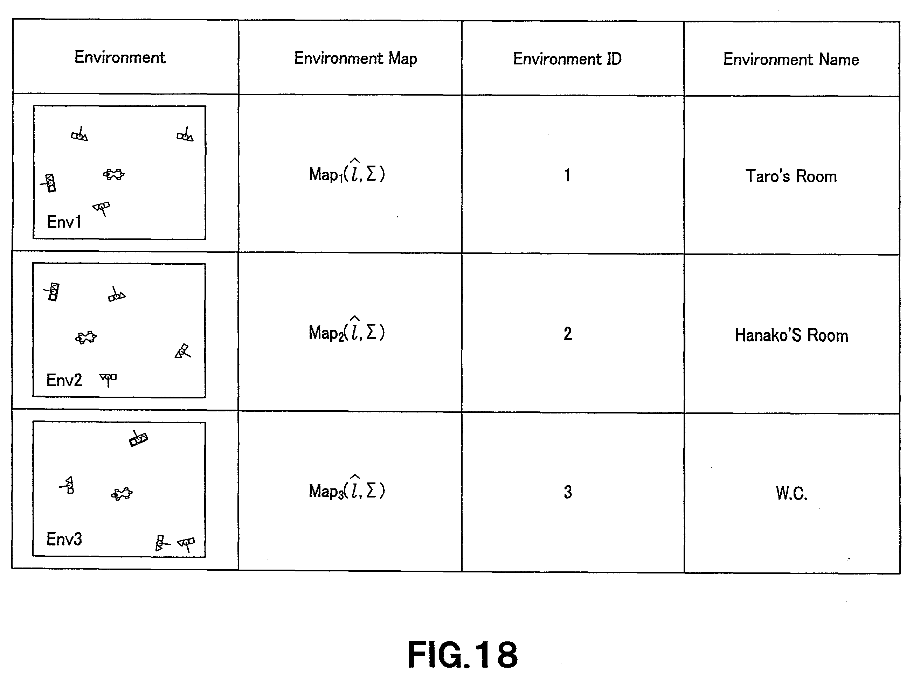

FIG. 18 is a schematic illustration of environment IDs stored in the environment storage device of an embodiment of robot apparatus according to the invention;

FIG. 19 is a schematic illustration of a method of terminating an operation of exploring landmarks in an environment;

FIG. 20 is a flow chart of the operation of the software that an embodiment of robot apparatus according to the invention comprises;

FIG. 21 is a schematic illustration of the flow of data input to the software of FIG. 20;

FIG. 22 is a schematic illustration of the degrees of freedom of an embodiment of robot apparatus according to the invention;

FIG. 23 is a schematic block diagram of the embodiment of robot apparatus of FIG. 22, illustrating the circuit configuration thereof;

FIG. 24 is a schematic block diagram of the software of the embodiment of robot apparatus of FIG. 22, illustrating the configuration thereof;

FIG. 25 is a schematic block diagram of the middleware layer of the software of the embodiment of robot apparatus of FIG. 22, illustrating the configuration thereof;

FIG. 26 is a schematic block diagram of the application layer of the software of the embodiment of robot apparatus of FIG. 22, illustrating the configuration thereof;

FIG. 27 is a schematic block diagram of the behavior model library of the application layer of FIG. 26;

FIG. 28 is a schematic illustration of a finite probability automaton that provides information for determining the behavior of the embodiment of robot apparatus of FIG. 22; and

FIG. 29 is a schematic illustration of a state transition table provided in each node of the finite probability automaton of FIG. 28.

Best Mode for Carrying Out the Invention

1. Overview of Robot Apparatus

Now, an embodiment of robot apparatus according to the invention will be described by referring to the related accompanying drawings. This embodiment is a robot apparatus mounted with an environment identifying apparatus by means of which the robot apparatus identifies the current environment from a plurality of registered environments while the robot apparatus is moving in an identifiable unique environment in which a plurality of landmarks are located.

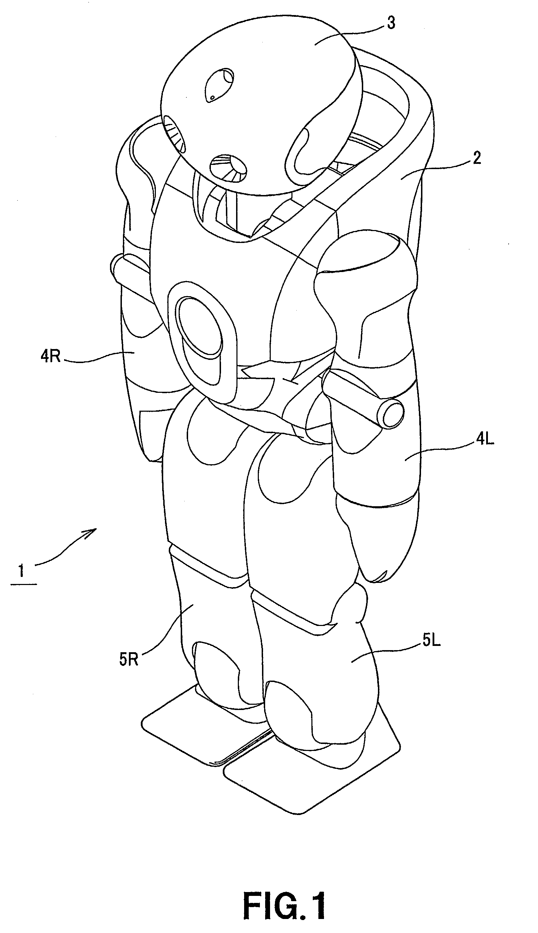

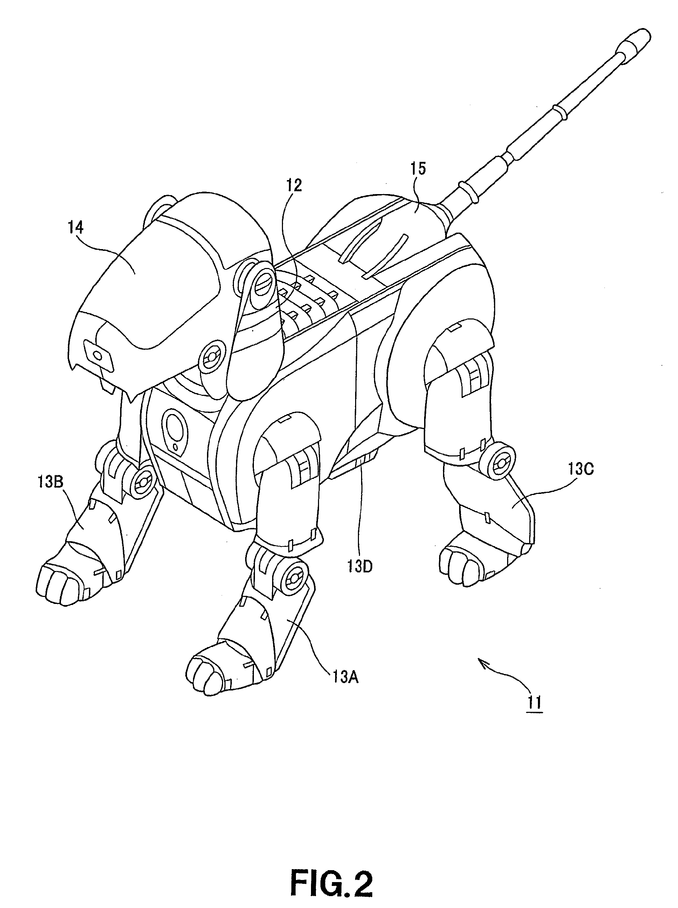

A robot apparatus mounted with such an environment identifying apparatus may be a humanoid type bipedal locomotion robot apparatus or an animal type tetrapodal locomotion robot apparatus designed for entertainment or some other purpose. FIG. 1 illustrates a typical bipedal locomotion robot apparatus. As shown in FIG. 1, a head unit 3 is linked to a predetermined position of a trunk unit 2 of the robot apparatus 1. Paired Left and right arm units 4R/L and paired left and right leg units 5R/L are also linked to the trunk unit 2 of the robot apparatus 1 (R and L are suffixes indicating left and right respectively in this letter of specification). FIG. 2 illustrates a typical tetrapodal locomotion robot apparatus which is a pet robot realized by mimicking a "dog". As shown in FIG. 2, leg units 13A, 13B, 13C, 13D are linked to a trunk unit 12 of the robot apparatus 11 respectively at front left, front right, rear left and rear right positions, while a head unit 14 and a tail unit 15 are linked to the trunk unit 12 respectively at the front end and the rear end of the latter.

Each of the robot apparatus 1, 11 contains small cameras realized by using CCD (charge coupled device)/ CMOS (complementary metal-oxide semiconductor) imaging elements in the head unit as visual sensors so that it can detect landmarks and acquire the positions of the landmarks relative to the robot apparatus by image processing operations. In this embodiment, the small cameras are used as landmark sensors. The present invention is applied to a humanoid type bipedal locomotion robot apparatus 1 in this embodiment.

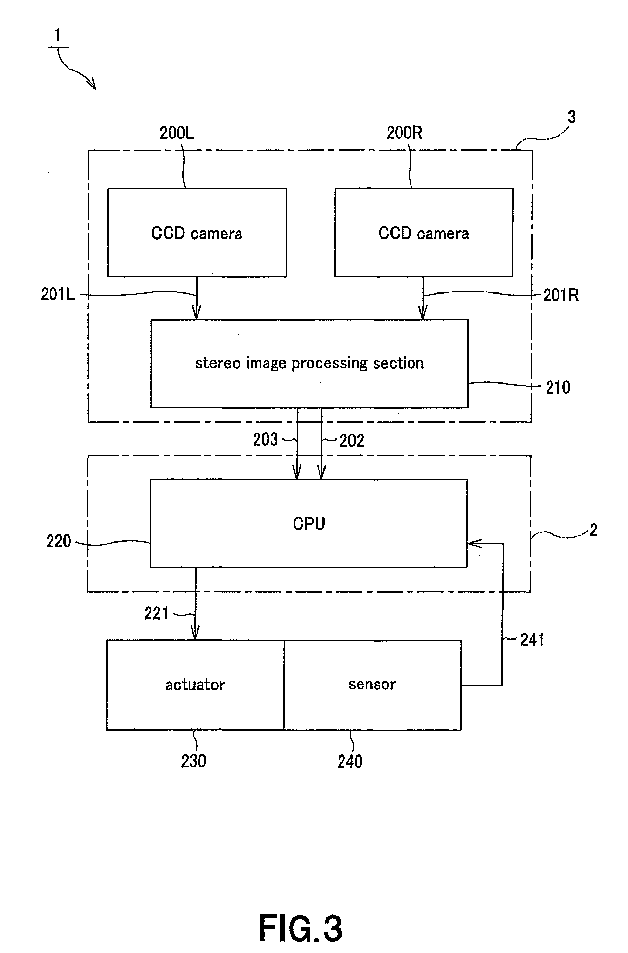

FIG. 3 is a schematic block diagram of this embodiment of robot apparatus according to the invention. As shown in FIG. 3, two CCD cameras 200R, 200L are arranged in the head unit 3 of the robot apparatus 1 to operate as right eye and left eye respectively. A stereo image processing section 210 is arranged behind the CCD cameras 200R, 200L so that the right eye image 20 1 R and the left eye image 201L respectively picked up by the CCD cameras 200R, 200L are input to the stereo image processing section 210. The stereo image processing section 210 acquires disparity data (distance information) of the images 201R, 201L by computations, and then a color image (YUV: luminance Y, color difference UV) 202 and a disparity image (YDR: luminance Y, disparity D, reliability R) 203 alternatively for the left and right eyes on a frame by frame basis, using the disparity data. The expression of disparity refers to the positional difference between the spot in the image obtained by the left eye and the spot in the image obtained by the right eye that correspond to a spot in the actual space that the robot apparatus views. The disparity changes as a function of the distance from the cameras to the spot in the space.

The color image 202 and the disparity image 203 are then input to CPU (control section) 220 contained in the trunk unit 2 of the robot apparatus 1. Each of the joints of the robot apparatus 1 is provided with one ore more than one actuators 230 and the motors of the joints of the robot apparatus 1 are driven to operate according to the command values of control signals 231 that are supplied from the CPU 220 to the actuators 230 as commands. Each of the joints (actuators) is equipped with a potentiometer and the rotatational angle of the motor that is connected to the actuator is sent to the CPU 220. Each of the sensors 240 fitted to the robot apparatus 1 including the potentiometers fitted to the actuators 230, the touch sensors fitted to the soles and the gyro sensor fitted to the trunk section observes the current state of the robot apparatus 1 such as information on the current joint angle, if relevant, situation information and attitude information and transmits the information to the CPU 220 as sensor data 241. Thus, the CPU 220 receives the color image 202, the disparity image 203 and the sensor data 241 from the actuators 230 including all the joint angles as input data and processes the input data by means of software, which will be described hereinafter, so that the robot apparatus 1 can behave autonomously.

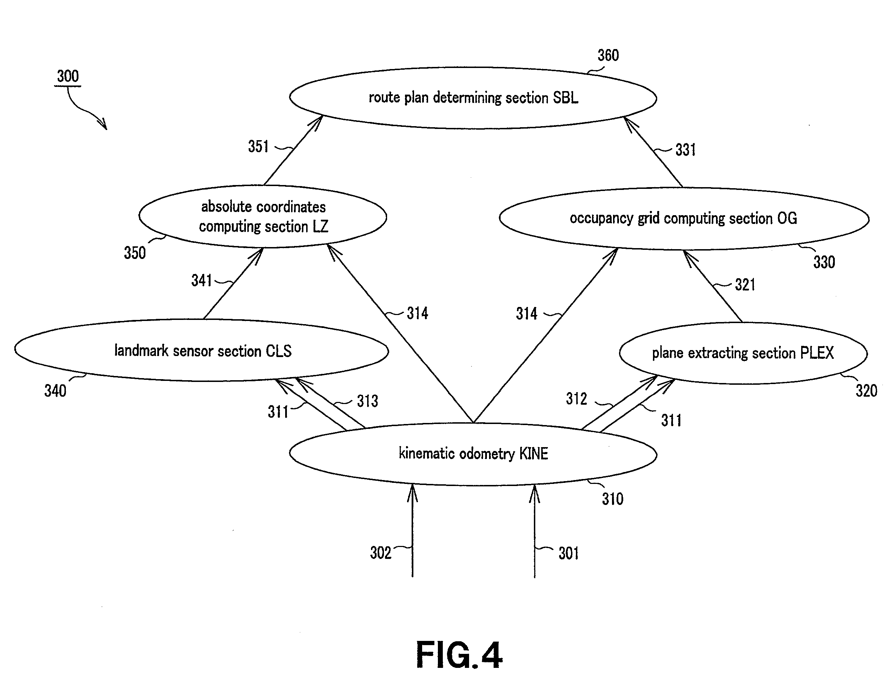

FIG. 4 is a schematic block diagram of the software for driving this embodiment of robot apparatus 1, illustrating the configuration thereof. The software of this embodiment is formed on an object basis and adapted to recognize the position, the quantity of movement, the surrounding obstacles and the environment map or the like of the robot apparatus 1 and carry out various recognizing processes so as to output a behavior string that the robot apparatus 1 is to ultimately show. The position of the robot apparatus 1 is expressed by two coordinate systems including a world coordinate system (to be also referred to as absolute coordinate system hereinafter) typically having its origin at a predetermined position, which may be that of a particular object such as a landmark as will be described in greater detail hereinafter, and a robot-centered coordinate system (to be also referred to as relative coordinate system) having its origin on the robot apparatus 1.

The entire system operates as objects by communicating with one another asynchronously. Objects exchange data and invoke programs by means of an inter-object communication method using message communications and a shared memory. As shown in FIG. 4, the software 300 of this embodiment of robot apparatus 1 comprises a quantity of movement computing means (kinematics odometry) KINE310 for computing a quantity of movement, a plane extracting section (plane extractor) PLEX320 for extracting a plane in the environment, an occupancy grid computing section OG330 for computing the obstacles (occupancies) in the environment, a landmark sensor section (landmark sensor) CLS340 for identifying the own position (position and posture) of the robot apparatus 1, an absolute coordinates computing section (localization) LZ350 for transforming the coordinates of the center of the robot apparatus 1 into the origin of an absolute coordinate system and a behavior determining section (situated behavior layer) SBL360 for determining the behavior to be taken by the robot apparatus 1.

In order for the robot apparatus 1 to behave autonomously, it is necessary for it to recognize the current environment in which it is situated. For this embodiment of the present invention, firstly the environment identifying apparatus of the robot apparatus 1 for identifying the environment in which it is moving will be described. The above mentioned software for causing the robot apparatus 1 to autonomously behave and the configuration and the actions that the robot apparatus 1 can take will be described in greater detail hereinafter.

2. Environment Identifying Apparatus

The environment identifying apparatus of this embodiment is adapted to build an environment map on the basis of the observations of landmarks it makes in the robot apparatus (mobile body) that is equipped with landmark sensors for recognizing the landmarks located in the environment and identifies the environment in which it is situated by comparing the environment map with a plurality of known environment maps (registered environment maps). The known environment maps may be those prepared by the user or those leant by the robot apparatus 1. Environment maps contain individual landmarks, the position of each of which is expressed by (x, y). Environment maps are compared by comparing the position of each of the landmarks that are being observed and contained in the environment map being prepared and that of the same landmark in each of the known environment maps and evaluating the similarity of the two positions.

Artificial landmarks of a plurality of different types in terms of profile and color are located in the environment and the robot apparatus 1 observes the positions of the landmarks and estimates the positions of the landmarks on the basis of the quantity of its own movement, while moving around in the environment. More specifically, the robot apparatus 1 estimates the positional relationship of the landmarks in the environment on the basis of the information on the observed positions of the landmarks and the quantity of its own movement. In this embodiment, the positional relationship of the landmarks is referred to as environment map. Assume here that there do not exist any two or more than two environments containing landmarks with the same positional location. Then, it is possible to uniquely specify any environment. More specifically, it is possible to prepare an identifiable unique environment by locating a plurality of artificial landmarks that can be uniquely identified in the environment in terms of profile and/or color. Then, the robot apparatus 1 can identify the environment in which it is situated by comparing the acquired positional relationship of the landmarks, or the environment map, and the group of environment maps stored in the environment map storage section of the environment identifying apparatus. Now, the environment identifying apparatus of this embodiment will be specifically described below.

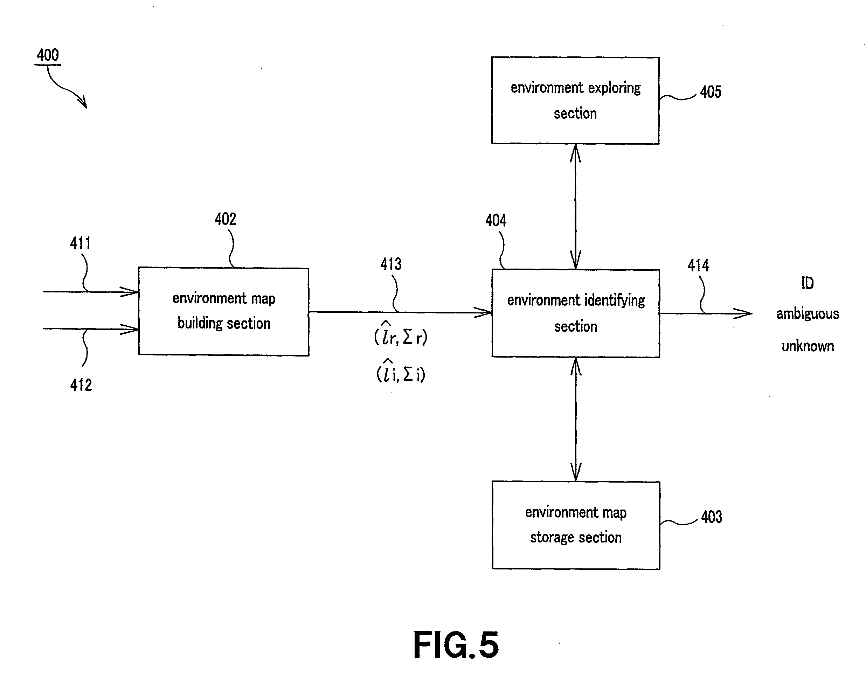

FIG. 5 is a block diagram of the environment identifying apparatus of this embodiment. As shown in FIG. 5, the environment identifying apparatus 400 of this embodiment comprises an environment map building section 402 adapted to be supplied with the result of observation of the landmarks in the current environment and the movement/state quantity of the robot apparatus 1 itself and build an environment map of the environment in which the robot apparatus is situated that contains information on the landmarks on the basis of the landmarks and the movement/state quantity, an environment map storage section (data base of environment) 403 having a data base of a plurality of environment maps (registered environment maps) and the environment IDs of the environment maps, the positional information on the landmarks in each environment and the environment ID uniquely assigned to the environment forming a set, an environment identifying section (environment identification means) 404 for identifying the environment in which the robot apparatus 1 is currently situated by comparing the environment map of the environment in which the robot apparatus 1 is currently situated that is being built by the environment map building section 402 and each of the known environment maps stored in the environment map storage section 403 for the degree of similarity and an environment exploring section (environment exploration/robot control means) 405 for driving the robot apparatus 1 to move around in order to make it recognize a new environment.

As described above, the images taken in by the CCD cameras 200L, 200R as shown in FIG. 3 are input to the stereo image processing section 210 and a color image (YUV) 202 and a disparity image (YDR) 203 are obtained by computations from the disparity information (distance information) of the left and right eye images 201R, 201L and input to the CPU 220. At the same time, the sensor data 241 from the plurality of sensors arranged in the robot apparatus 1 are also input to the CPU 220. The image data 301 including the disparity information and the disparity image and the sensor data 302 are then input to the quantity of movement computing means KINE.

The quantity of movement computing means KINE computes the quantity of movement (odometry) of the robot-centered coordinate system on the basis of the input data including the image data 301 and the sensor data 302. The robot apparatus 1 also detects its own postural direction and information on the postural direction is supplied to the environment map building section 402 along with the quantity of movement. Color images (YUV) 202 and disparity images (YDR) 203 of the landmarks located in the environment and observed by the CCD cameras 200L, 200R are also input and the result of observation of the landmarks (to be referred to as landmark information hereinafter) 411 is supplied from a landmark recognizing means (not shown) to the environment map building section 402. Then, the environment map building section 402 builds an environment map 413 of the environment in which the robot apparatus 1 is currently situated from the input information including the landmark information 411 and the information on the quantity of movement and the postural direction (to be referred to as movement/state quantity hereinafter) and supplies it to the environment identifying section 404.

The environment identifying section 404 identifies the environment in which the robot apparatus 1 is currently situated by comparing the environment map 413 supplied from the environment map building section 402 and showing the environment in which the robot apparatus 1 is currently situated with the plurality of known environment maps (registered environment maps) stored in the environment map storage section 403. As pointed out above, the known environment maps may be those prepared by the user or those built by the environment map building section 402. If the environment in which the robot apparatus 1 is currently situated agrees with any of the plurality of registered environment maps stored in the environment map storage section 403, the environment map storage section 403 outputs the environment ID (environment identifying information) 414 that corresponds to the registered environment map and stored in it. If, on the other hand, the environment in which the robot apparatus 1 is currently situated agrees with a plurality of registered environment maps stored in the environment map storage section 403, the environment map storage section 403 outputs an ambiguous signal indicating that the environment in which the robot apparatus 1 is currently situated cannot be identified. If the environment in which the robot apparatus 1 is currently situated does not agree with any of the registered environment maps stored in the environment map storage section 403, the environment map storage section 403 outputs an unknown signal indicating that the environment in which the robot apparatus 1 is currently situated cannot be identified.

The environment map storage section 403 has an environment map data base (not shown) storing positional information on the landmarks of each environment and the environment IDs uniquely assigned to the environments of the registered environment maps. The environment exploring section 405 is adapted to drive the robot apparatus 1 to move around in order to make it recognize a new environment by means of an external remote control.

Landmark identifying information for identifying the landmarks in each environment and the environment IDs assigned to the environments of the registered environment maps may be input to the environment map data base of the environment map storage section 403 in advance or the robot apparatus 1 may prepare the environment map data base by itself by means of the environment exploring section 405.

The robot apparatus 1 can build an environment map and identify the environment in which it is situated when landmarks of a plurality of different types in terms of profile and color are located in it by detecting and recognizing the colors and the profiles of the landmarks by means of the landmark sensors such as the CCD cameras 200R, 200L it has. For example, the environment map data base can be managed with ease when an environment ID is assigned to each environment in which a predetermined number of landmarks are located.

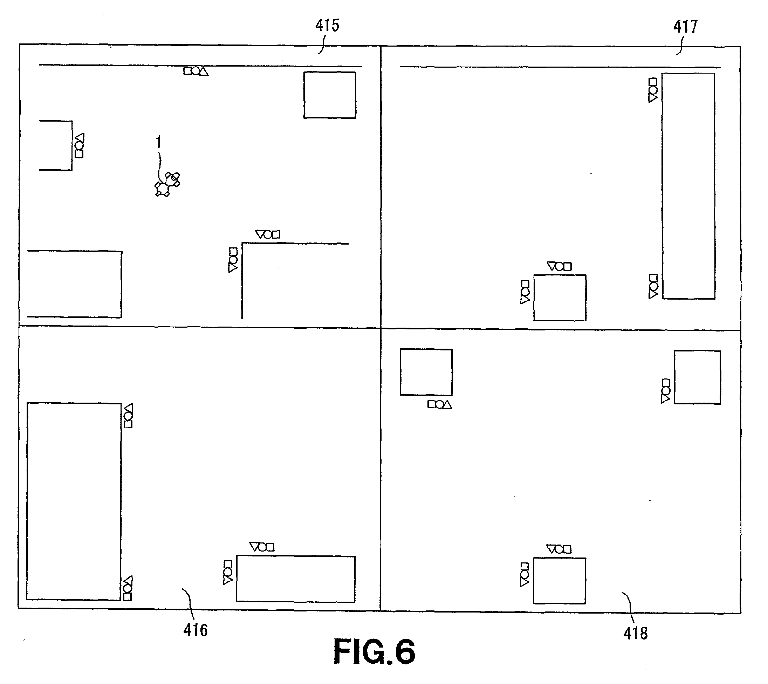

For example, if a house has four rooms including a living room 415, a bed room 416, a kitchen 417 and a play room 418 as shown in FIG. 6, the robot apparatus 1 does not manage the entire house by means of a single environment map but assigns environment IDs respectively to the rooms 415 through 418 and manages the house by means of four environment maps, handling each room as an environment. A predetermined number of landmarks are located in each of the rooms 415 through 418 so that each room is uniquely identifiable by means of the location and the number of landmarks.

Thus, the amount of data of each environment is reduced when the entire surrounding is not managed by a single environment map but dividing it into a plurality of identifiable unique environments and storing environment maps of the plurality of environments so that it is possible to reduce the volume of computations that have to be performed when data are updated or added. In this embodiment, an environment can be identified as an identifiable unique environment by when a number of landmarks are located in a manner specific to the environment. An environment can be identified with ease when the landmarks located in it are uniquely identifiable in the environment.

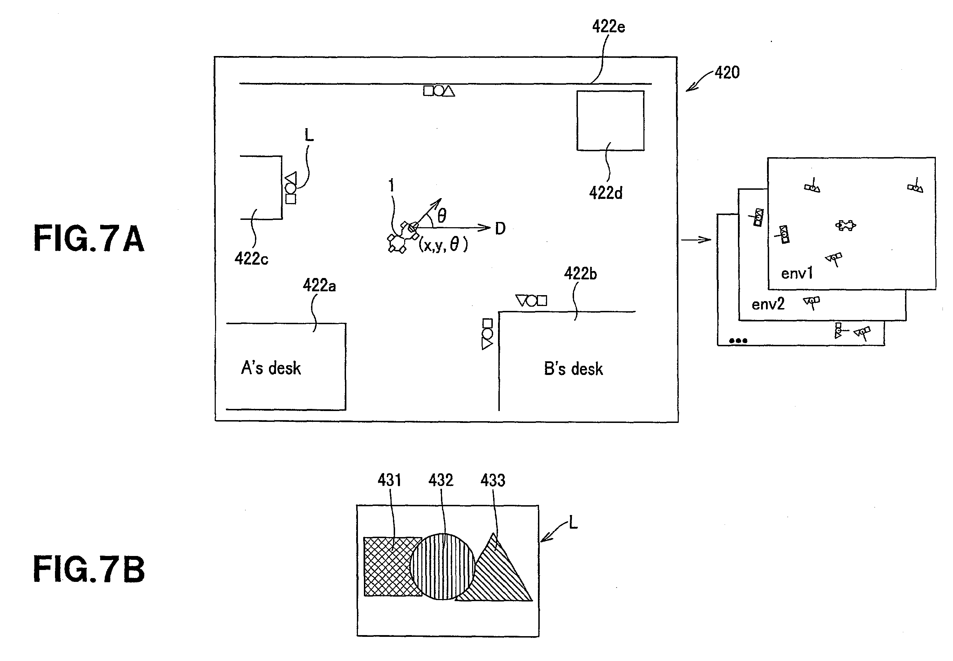

FIG. 7A is a schematic illustration of a robot apparatus 1 exploring in an environment (e.g., in the living room 415 in FIG. 6) and FIG. 7B is a schematic illustration of a landmark of the embodiment. As shown in FIG. 7A, a plurality of artificial landmarks L of a plurality of different types are located respectively on objects 422a through 422e including desks, pillars and walls to which a landmark can be applied (located). The robot apparatus 1 walks around in the environment 420 and acquires the positional relationship of the landmarks L in the environment in which the robot apparatus 1 itself is situated from the result of observation of the landmarks made by means of the CCD cameras 200R, 200L and the position $(x, y, \theta)$ of the robot apparatus 1 itself The position $(x, y, \theta)$ of the robot apparatus 1 can be expressed by means of the position $(x, y)$ of the robot apparatus 1 in a coordinate system having its reference point (origin) at a predetermined position and the angle (θ) of the postural direction of the robot apparatus 1 from a predetermined direction D selected as reference (0°). The robot apparatus 1 can grasp its own position (x, y, θ) by computing the quantity of its own movement (dx, dy) and the angle of its own movement (dθ) by the above described quantity of movement computing means on the basis of the data acquired by the CCD cameras 200R, 200L and the sensor 240 it has.

As shown in FIG. 7B, a landmark L is formed by combining geometrical patterns 431 through 433, which typically include a quadrangle, a circle and a triangle and are located to show a predetermined positional relationship and different colors so as to make the landmark L identifiable among many landmarks. When the robot apparatus 1 identifies the environment 420, it acquires the positional relationship of the landmarks located in the environment in which the robot apparatus 1 is currently situated from its own movement/state quantity and determines if the current environment agrees with one of the registered environments or not by comparing the types and the positional relationship of the landmarks L with those of the landmarks L in each of the (registered) environment maps in the past that are stored in the environment map storage section 403.

If the current environment does not agree with any of the registered environments and hence is a new one or when the robot apparatus 1 is preparing an environment map data base, the robot apparatus 1 acquires the positional relationship of all the landmarks in the environment in which it is situated by means of the environment exploring section 405 on the basis of its own movement/state quantity and assigns an environment ID such as Env 1 or Env 2 to the environment that is newly acquired and identifiable as a result of the exploration. Then, it stores the types of all the landmarks L in the environment that is acquired as a result of the exploration and their positional relationship in the environment map storage section 403 with the environment ID assigned to the new environment. 2-1. Landmarks

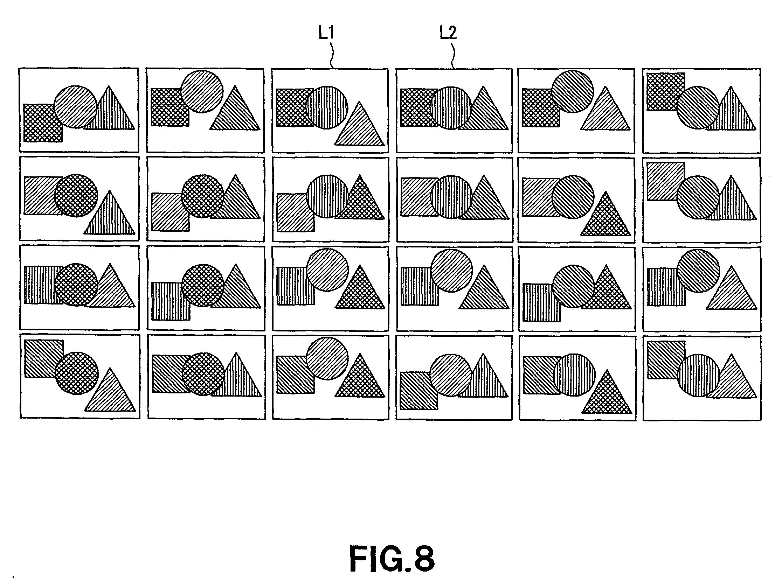

Now, the landmarks located in the environment will be described below. FIG. 8 is a schematic illustration of landmarks that can be used for the purpose of the present invention. Identifiable unique landmarks are obtained for this embodiment by using four colors of red, blue, green and yellow for three geometrical patterns of triangle, quadrangle and circle and appropriately combining the patterns and the colors. FIG. 8 shows a total of 24 different landmarks obtained by locating three geometric patterns of a quadrangle, a circle and a triangle respectively at the left, at the center and at the right to make the different fixed positional relationships and using four colors for the geometric patterns. Thus, different landmarks can be formed by using a plurality of geometric patterns with different positional relationships and a plurality of different colors.

In FIG. 8, the landmark L1 and the landmark L2 show a same positional relationship of a quadrangle, a circle and a triangle but their positional locations slightly differ from each other. The robot apparatus 1 can recognize the difference of positional relationship and, as a matter of fact, it is possible to prepare numerous different landmarks and have the robot apparatus 1 to recognize them discriminately. The robot apparatus 1 can observe and identify each of the landmarks when it is designed to recognize a combination of the three geometric patterns as a landmark by observing it or when the landmarks to be used are registered in advance. When landmarks as shown in FIG. 8 are used, the robot apparatus 1 can detect the direction of each landmark. Thus, the robot apparatus 1 can identify the environment in which it is situated highly accurately with a small number of landmarks when it can detect the direction of each landmark in addition to the position of each landmark.

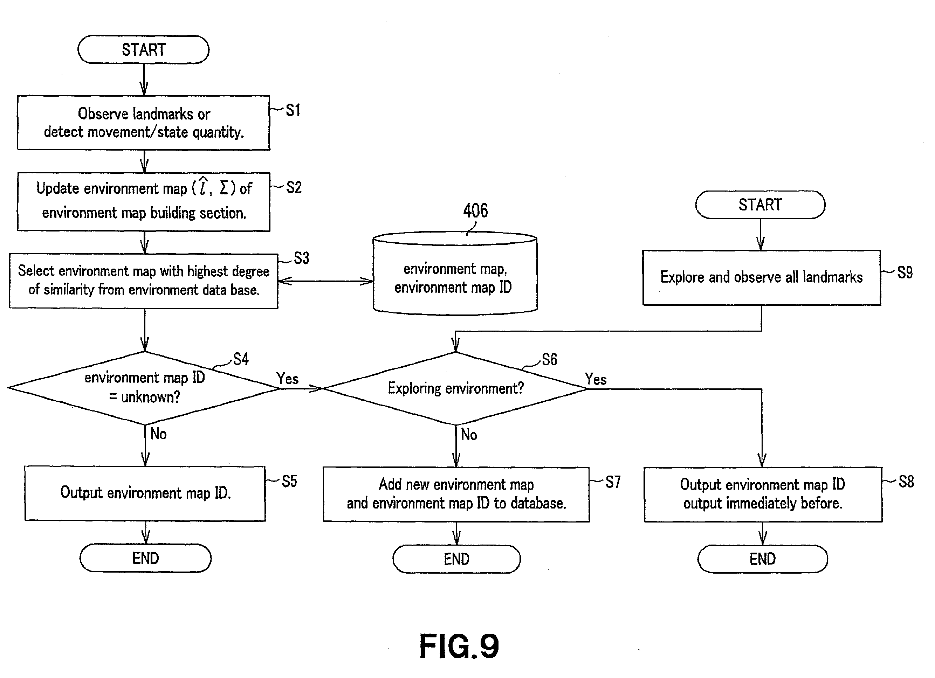

Now, the processing operation of the environment identifying apparatus 400 of this embodiment will be described below. FIG. 9 is a flow chart of the environment identifying method that the environment identifying apparatus of this embodiment uses. Referring to FIG. 9, firstly, if the environment map building section 402 observes a landmark or detects a motion of the robot apparatus 1 itself (Step S1), it updates the internal model of environment map (Step S2). It is assumed here that an environment map is expressed by formula (1) below, using the state vector 1 of the robot apparatus 1 and that of the landmark. The environment map and the state vectors will be described in greater detail hereinafter.

$$(\hat{l}, \Sigma_l): \text{environment map} \tag{1}$$

where,

$\hat{l}$: median of state vectors

$\Sigma_l$ : covariance matrix of state vectors

As the environment map is supplied from the environment map building section 402 to the environment identifying section 404, the environment identifying section 404 searches the environment data base of the environment map storage section 403 and detects the environment map that matches the former environment map best and its environment ID (Step S3).

If a matching environment map and its environment ID are registered in the environment data base (Step S4: NO), the environment ID is output for the environment in which the robot apparatus 1 is currently situated (Step S5).

If, on the other hand, neither a matching environment map nor its environment ID are registered in the data base 406 (Step S4: YES), the environment exploring section 405 determines if it is exploring the environment or not (Step S6). If it is determined that the environment exploring section 405 is exploring the environment (Step S6: YES), it outputs the environment ID that is output immediately before as the environment ID for the environment in which the robot apparatus 1 is currently situated (Step S8). If, on the other hand, it is determined that the environment exploring section 405 is not exploring the environment and hence has ended the exploration of the environment (Step S6: NO), it adds the environment map as new environment map to the environment data base of the environment map storage section 403 (Step S7).

The state of exploring action in Step S6 is controlled by the environment exploring section 405 and it is detected if the robot apparatus 1 has visited all the landmarks in the environment or not (Step S9). If all the landmarks in the environment have not been observed yet, it is determined that the environment exploring section 405 is still exploring the environment.

2-2. Environment Map Building Section

Now, each of the processing sections of FIG. 3 will be described in greater detail. Firstly, the environment map building method of the environment map building section 402 will be explained. The environment map building section 402 builds an environment map N of the environment in which the robot apparatus 1 is currently situated, utilizing information on observation of landmarks and information on observation of the motion of the robot apparatus 1 itself (movement/state quantity).

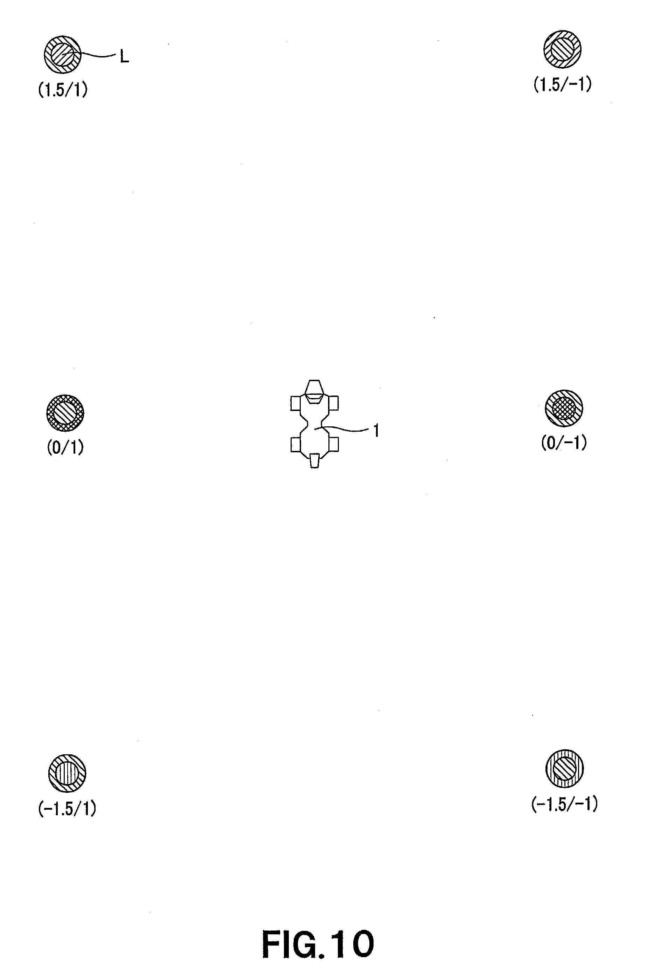

Now, the reason why the environment map building section 402 utilizes information on observation of landmarks and information on observation of the motion of the robot apparatus 1 itself when it recognizes the environment will be discussed below. FIGS. 10 through 12 show landmarks L each of which is formed by combining an outer circle and an inner circle that carry different respective colors as patterns. It is possible to prepare identifiable unique environments by locating landmarks of different types that are formed by using circles and colors and combining a plurality of different patterns.

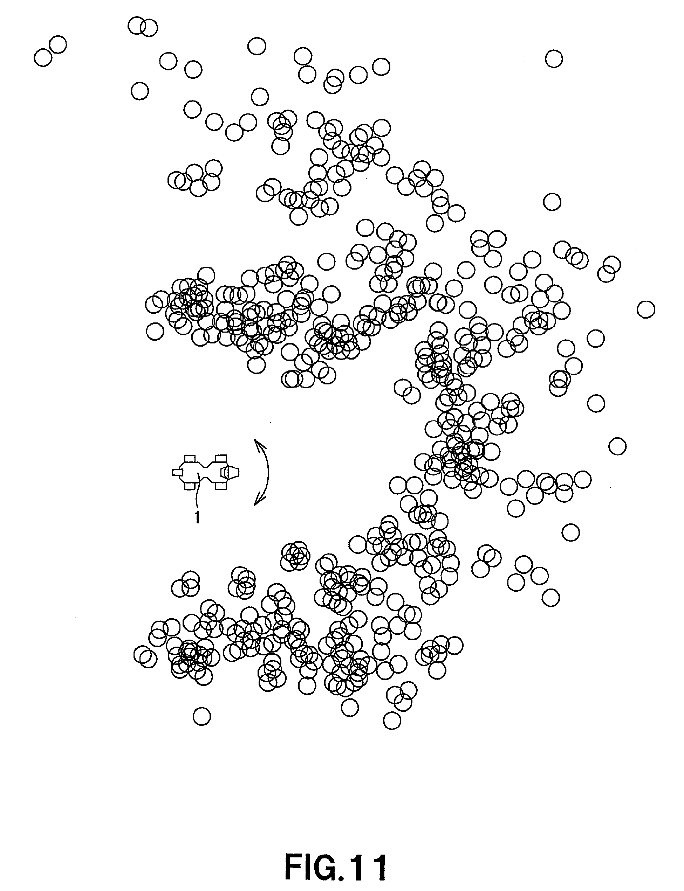

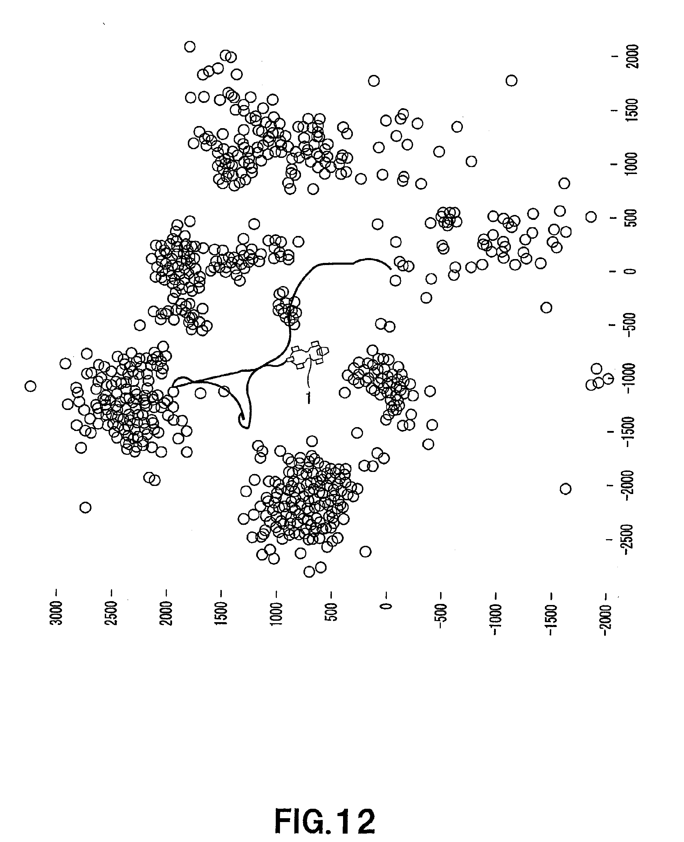

Assume here that a robot apparatus 421 is situated at the center of an environment containing a total of six landmarks L as shown in FIG. 10. If the robot apparatus 421 shifts the direction it faces (postural direction) and tries to grasp the positions of the landmarks, using only the result of observation of the landmarks, it observes a same landmark at different positions as it moves as shown in FIG. 11 and hence cannot identify the position of the landmark because the positional information on the landmarks observed by the cameras of the robot apparatus 421 is input on a time series basis. However, as the robot apparatus 421 continues the observation to a certain extent, taking the movement/state quantity including the quantity of movement and the postural direction of the robot apparatus 421 into consideration along with the result of observation of landmarks obtained by the robot apparatus 421, the positions of a same landmark converges as shown in FIG. 12 so that the robot apparatus 421 can eventually recognize the environment.

Information on observation of landmarks can be obtained as a result of observation acquired by using the cameras of the robot apparatus 1 and the movement/state quantity including the quantity of movement and the postural direction of the robot apparatus 1 can be detected by the robot apparatus 1 itself. However, such information contains errors in the result of observation acquired by using the cameras and detection errors of the quantity of movement and the postural direction.

Therefore, in this embodiment, an environment map is expressed by means of the state (state quantity) $l_r$ of the robot apparatus 1 and the state vector $l = (l_r, l_1, l_2, ..., l_n)^T$ formed by using the estimated value of the state (state quantities) of n landmarks $l_L = (l_1, l_2, ..., l_n)^T$. Additionally, the state $l_r$ of the robot apparatus 1 is expressed by $l_r = (x, y, \theta)^T$, using the position and the posture of the robot apparatus 1, whereas the state $l_i$ of each of the landmarks is expressed by $l_i = (x_i, y_i)$, using the position of the landmark in the world coordinate system.

The state quantities are expressed by means of probability density function p(1) showing a Gaussian distribution so that they may be statistically handled, whereas the environment map is expressed by formula (2) shown below.

$$\hat{1} = \begin{pmatrix} \hat{1}_r \\ \hat{1}_1 \\ \vdots \\ \hat{1}_n \end{pmatrix} \quad \Sigma_1 = \begin{pmatrix} \Sigma_{rr} & \Sigma_{r1} & \cdots & \Sigma_{rn} \\ \Sigma_{1r} & \Sigma_{11} & \cdots & \Sigma_{1n} \\ \Sigma_{2r} & \Sigma_{21} & \cdots & \Sigma_{2n} \\ \vdots & \vdots & \ddots & \vdots \\ \Sigma_{nr} & \Sigma_{n1} & \cdots & \Sigma_{nn} \end{pmatrix}$$

$$\hat{1}_r = \begin{pmatrix} \hat{x}_r \\ \hat{y}_r \\ \hat{\theta}_r \end{pmatrix} \qquad \hat{1}_i = \begin{pmatrix} \hat{x}_i \\ \hat{y}_i \end{pmatrix}$$

$$\cdots \quad (2)$$

$\hat{1}$: median of state vectors

$\Sigma_1$ : covariance matrix of state vectors

$(\hat{1}, \Sigma_1)$: environment map

$1_i = (x_i, y_i)$: state vector of landmark

$1_r = (x, y, \theta)^T$ : state vector of robot apparatus

Since determining the environment map is identifying the state vector of $1 = (1_r, 1_1, 1_2, ..., 1_n)^T$, this problem ends in that of identifying the state vector 1 using an extended Kalman filter model to which the motion of the robot apparatus 1 is input and for which the observation of landmarks is used as observation quantity. 2-2-1. Extended Kalman Filter

Now, the extended Kalman filter will be described below. In the extended Kalman filter model, if the function (transition function) that gives a logical state transition when input m is given in state 1 is F(l, m) and the function (observation function) that gives a logical value for known observation information (positions of landmarks) o in state 1 is H(1), while the noise components of the state 1 and the observation information o are w and v respectively (where noise components showing a Gaussian distribution with a median of 0 are assumed), the model of state 1 and that of observation information o are expressed respectively by formulas (3) and (4) below.

$$1 \leftarrow F(l,m) + w \qquad (3)$$

$$o \leftarrow H(l) + v \qquad (4)$$

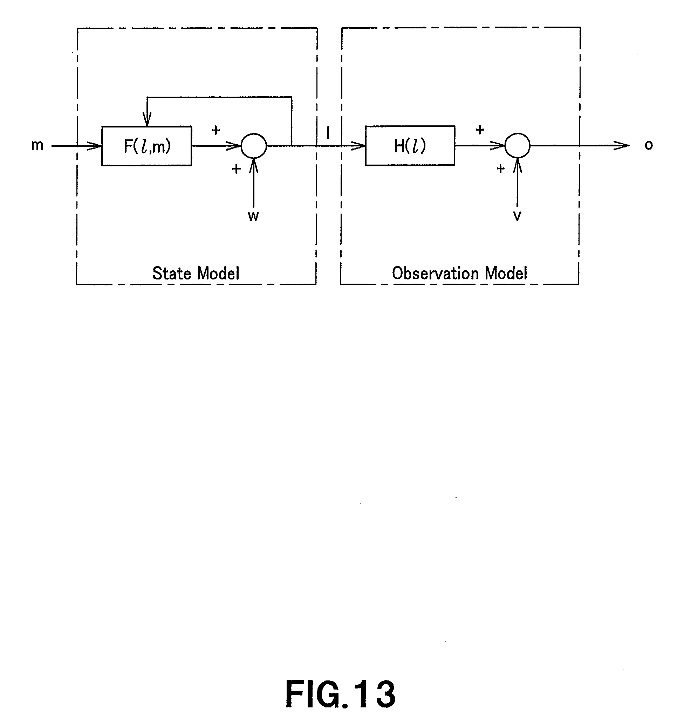

FIG. 13 is a schematic illustration of an extended Kalman filter model. Firstly, the update rule for state quantity 1 by means of input information m and observation information o in the model shown in FIG. 13 will be described explained.

Assume that state 1 at a given time is estimated by formulas (5) and (6) below.

$$\hat{1}: \text{median} \qquad (5)$$

$$\Sigma_1 : \text{covariance matrix} \qquad (6)$$

Firstly, when input m is observed in state 1, the median and the covariance matrix of state 1 are updated respectively by formulas (7) and (8) below;
update by input information:

$$\hat{1}0 \leftarrow F(\hat{1}, \hat{a}) \qquad (7)$$

$$\Sigma_1 \leftarrow \nabla F_1 \Sigma_1 \nabla F_1^T + \nabla F_a \Sigma_a \nabla F_a^T \qquad (8)$$

where,

$\nabla F_l$ : Jacobian matrix given by $\partial F/\partial l$
where,

$\nabla F_a$ : Jacobian matrix given by $\partial F/\partial a$

On the other hand, when observation information o is observed in state 1, the median and the covariance matrix of state 1 are updated respectively by formulas (9) and (10) below.
update by output information :

$$\hat{l} \leftarrow \hat{l} + W\hat{v} \qquad (9)$$

$$\Sigma_l \leftarrow \Sigma_l - W\Sigma_v W^T \qquad (10)$$

where,

$W$ : Kalman filter gain given by $W = \Sigma_l \nabla H_l^T \Sigma_v^{-1}$
$v$:median of observation error given by $v = \hat{o} - H(\hat{l})$
$\Sigma_v$ : covariance of observation error given by $\Sigma_v = \Sigma_s + \nabla H_l \Sigma_l \nabla H_l^T$

2-2-2. Environment Map Updating Method

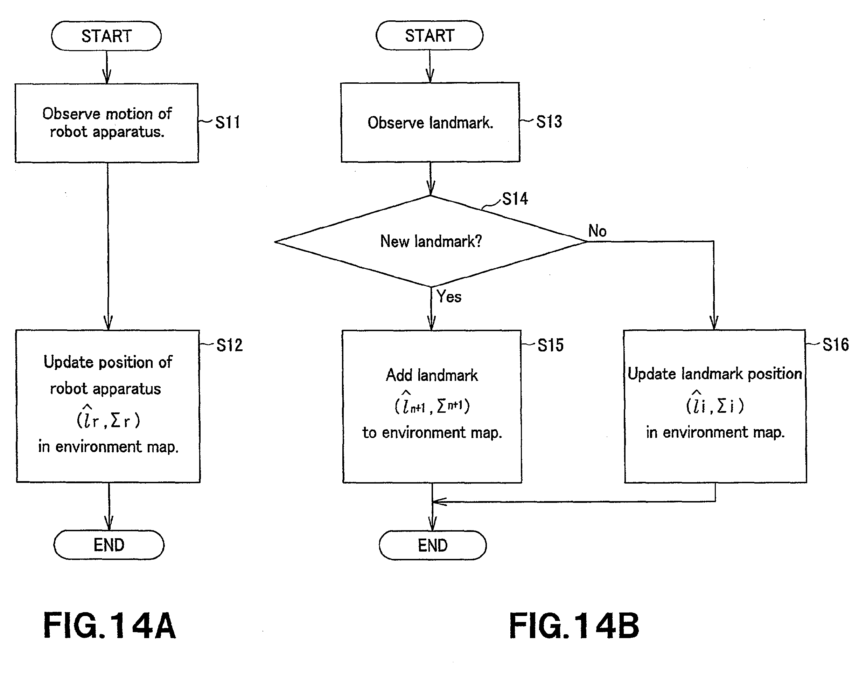

Now, the flow of the processing operation for computationally determining an environment map will be described below. FIG. 14A and FIG. 14B are flow charts of a method of building an environment map, while updating the environment map. Assume that an initial value is input to the environment map. When a motion is observed on the robot apparatus 1 itself (Step S11), the state $l_r$ of the robot apparatus 1 in the environment map is updated (Step S 12). When a landmark is observed (Step S13), it is determined if the observed landmark is a new landmark that is not found in the state $l_L$ of the landmarks in the current environment map or not (Step S 14). If the observed landmark is a new landmark (Step S 14: YES), landmark state $1_{n+1}$ is added to the landmark state $l_L$ (Step S15). If, on the other hand, the observed landmark is not a new landmark (Step S 14: NO), the state $l_i$ of the re-observed landmark is updated (Step S 16). An environment map is built by repeating the above described processing operation.
The environment is updated by re-computations when a motion of the robot apparatus 1 itself is observed in Step S12, when a new landmark is observed in Step S 15 or when a landmark is re-observed in Step S 16. The method of updating the environment map will be described in greater detail below.

A. When the robot apparatus observes its own motion (Robot Motion Observation)

As the robot apparatus 1 moves, the median and the covariance matrix of the state vector are updated by means of the update rule in the following manner, using the input information of the extended Kalman filter. If the observed quantity of movement of the robot apparatus 1 is m = ($x_m$, $y_m$, $\theta_m$), the observed quantity of the quantity of movement of the robot apparatus 1 is expressed by formula (11) below, using a probability density function p(m) showing a Gaussian distribution, because it is statistically handled.

$$p(m) \sim N\left( \hat{m} = \left( \hat{x}_m, \hat{y}_m, \hat{\theta}_m \right)^T, \Sigma_m \right) \qquad \cdots \ (11)$$

where,
m: median of state quantity
$\Sigma_m$ : covariance matrix of state quantity
The state $l_r'$ of the robot apparatus 1 after doing a motion of a quantity of movement m in state $l_r$ of the robot apparatus 1 can be geometrically determined by using formula (12) below.

$$l_r = l_r + R_3(\theta_r)m \qquad (12)$$

If the right side of the above formula (12) is function f(1, m), the state vector 1 = ($l_r$, $l_1$, $l_2$, ..., $l_n$)$^T$ of the envi-

ronment map is not altered because the state of the landmarks $I_L = (I_1, I_2, ..., I_n)^T$ are not influenced by the motion of the robot apparatus 1. Therefore, the median and the covariance matrix of the state vector 1 is expressed respectively by formula (13) and formula (14) as shown below. The computation cost of these computations is O(n).

$$\hat{I} \leftarrow f(\hat{I}, \hat{m}) = \begin{pmatrix} f(\hat{I}_r, \hat{m}) \\ \hat{I}_1 \\ \vdots \\ \hat{I}_n \end{pmatrix} = \begin{pmatrix} \hat{I}_r + R_3(\hat{\theta}_r)\hat{m} \\ \hat{I}_1 \\ \vdots \\ \hat{I}_n \end{pmatrix} \qquad \cdots \quad (13)$$

$$\Sigma_1 \leftarrow \begin{pmatrix} \nabla f_r \Sigma_{rr} \nabla f_r^T + \nabla f_m \Sigma_m \nabla f_m^T & \nabla f_r \Sigma_{r1} & \cdots & \nabla f_r \Sigma_{n1} \\ \Sigma_{1r} \nabla f_r^T & \Sigma_{11} & \cdots & \Sigma_{1n} \\ \Sigma_{2r} \nabla f_r^T & \Sigma_{21} & \cdots & \Sigma_{2n} \\ \vdots & \vdots & \ddots & \vdots \\ \Sigma_{nr} \nabla f_r^T & \Sigma_{n1} & \cdots & \Sigma_{nn} \end{pmatrix} \qquad \cdots \quad (14)$$

where,

$\nabla f_r$ : Jacobian obtained by $\frac{\partial f}{\partial r}$

$\nabla f_m$ : Jacobian obtained by $\frac{\partial f}{\partial m}$

B. When a new landmark is observed (New Landmark Observation)

When a new landmark is observed, the environment map is updated by re-computing the median and the covariance matrix of the state vector 1, using the update rule for the input information of the extended Kalman filter.
If the relative position of the newly observed landmark from the robot apparatus 1 is o = (x, y), the observed quantity of the relative position of the newly observed landmark from the robot apparatus 1 is expressed by formula (15) below, using a probability density function p(o) showing a Gaussian distribution, because it is statistically handled as described above.

$$p(o) \sim N(\hat{o} = (\hat{x}_o, \hat{y}_o)^T, \Sigma_o) \qquad (15)$$

where,
ô: median of the state quantity
$\Sigma_o$ : covariance matrix of the state quantity
If a new landmark o = (x, y) is observed in state $I_r, = (x, y, \theta)^T$ of the robot apparatus 1, the position $I_i$, in the world coordinate system of landmarks can be geometrically determined by means of formula (16) below.

$$I_i = (x_r, y_r)^T + R(\theta_r)(x,y)^T \qquad (16)$$

The right side of the above formula is expressed by function g (1, o). The state $I_r$ of the robot apparatus 1 and the state of the known landmarks $I_L = (I_1, I_2, ..., I_n)^T$ are not influenced by the observation of the new landmark. $I_{n+1}$ is newly added to the landmark state. Therefore, the median and the covariance matrix of the state vector 1 is expressed respectively by formula (17) and formula (18) as shown below. The computation cost of these computations is O(n).

$$\hat{1} \leftarrow \begin{pmatrix} \hat{1} \\ g(1_r,o) \end{pmatrix} = \begin{pmatrix} \hat{1} \\ (\hat{x}_r,\hat{y}_r)^T + R(\hat{\theta}_r)\hat{o} \end{pmatrix} \qquad \cdots \ (17)$$

$$\Sigma_1 \leftarrow \begin{pmatrix} \Sigma_{rr} & \Sigma_{r1} & \cdots & \Sigma_{rn} & \Sigma_{rr}\nabla g_r^T \\ \Sigma_{1r} & \Sigma_{11} & \cdots & \Sigma_{1n} & \Sigma_{1r}\nabla g_r^T \\ \vdots & \vdots & \ddots & \vdots & \vdots \\ \Sigma_{nr} & \Sigma_{n1} & \cdots & \Sigma_{nn} & \Sigma_{nr}\nabla g_r^T \\ \nabla g_r\Sigma_{rr} & \nabla g_r\Sigma_{r1} & \cdots & \nabla g_r\Sigma_{rn} & \nabla g_r\Sigma_{rr}\nabla g_r^T + \nabla g_o\Sigma_o\nabla g_o^T \end{pmatrix}$$

$$\cdots \ (18)$$

where,

$\nabla g_r$ : Jacobian obtained by $\dfrac{\partial g}{\partial r}$

$\nabla g_o$ : Jacobian obtained by $\dfrac{\partial g}{\partial o}$

C. Re-Observation of Landmark (Landmark Re-Observation)

If a known landmark is re-observed, the environment map is updated by re-computing the median and the covariance matrix of the state vector 1 by means of the update rule, using the output information of the extended Kalman filter.

Firstly, if the relative position of the re-ovserved landmark from the robot apparatus 1 is $o = (x_i, y_i)$, the observed quantity of the relative position of the landmark from the robot apparatus 1 is expressed by formula (19) below, using a probability density function p(o) showing a Gaussian distribution, because it is statistically handled as described above.

$$p(o){\sim}N(\hat{o},\Sigma_o) \qquad\qquad (19)$$

where,
ô: median of the state quantity
$\Sigma_o$ : covariance matrix of the state quantity

Then, if it is assumed that the following expressions hold true due to the update rule using the output information of the extended Kalman filter, the state quantity and the covariance matrix are updated respectively by formulas (20) and (21) shown below.

$$v = \hat{o} - \bar{o}$$

$$\Sigma_v = \nabla h_1\Sigma_1\nabla h_1^T + \Sigma_o$$

$$W = \Sigma_1\nabla h_1^T\Sigma_v^{-1}$$

W : Kalman filter gain given by $W = \Sigma_1 \nabla h_1^T \Sigma_v^{-1}$
v: median of observation error given by $v = \hat{o} - H(\hat{1})$
$\Sigma_v$ : covariance matrix of observation error given by $\Sigma_v = \Sigma_s + \nabla H_1\Sigma_1\nabla H^T_1$

$$\hat{I} \leftarrow \hat{I} + W_v \qquad (20)$$

$$\Sigma_I \leftarrow \Sigma_I - W\Sigma_v W^T \qquad (21)$$

The theoretical value of an observed value of state $l_i$ of a landmark can be geometrically determined by means of formula (22) below. The computation cost of these computations is $O(n^2)$.

$$\overline{o} = h(\hat{I}) = R(-\hat{\theta}_r)\begin{pmatrix} \hat{x}_i - \hat{x}_r \\ \hat{y}_i - \hat{y}_r \end{pmatrix} \qquad \cdots \quad (22)$$

$\overline{o}$: theoretical value of observed value of landmark li in state $\hat{I}$

2-2-3. Example of Building an Environment Map

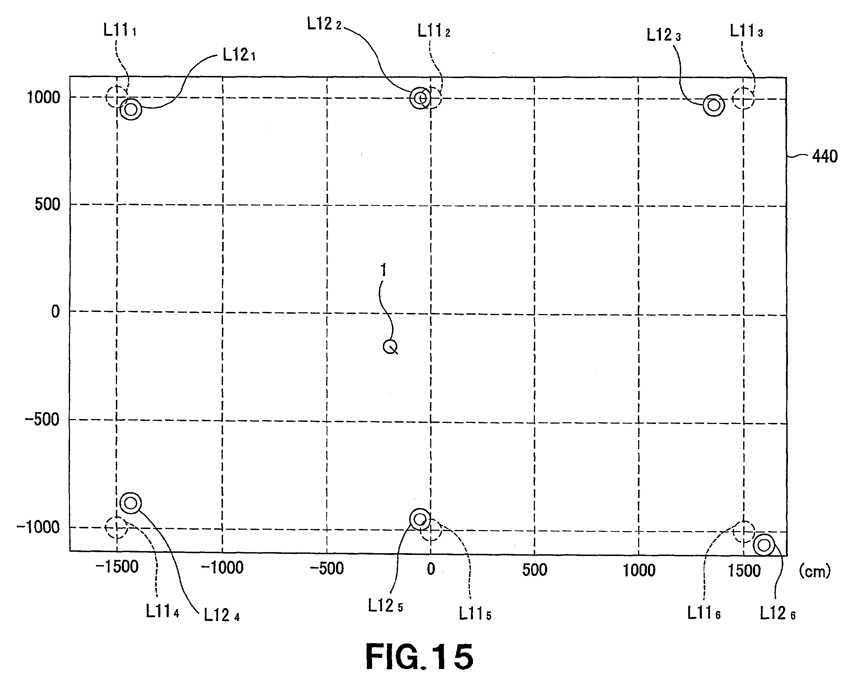

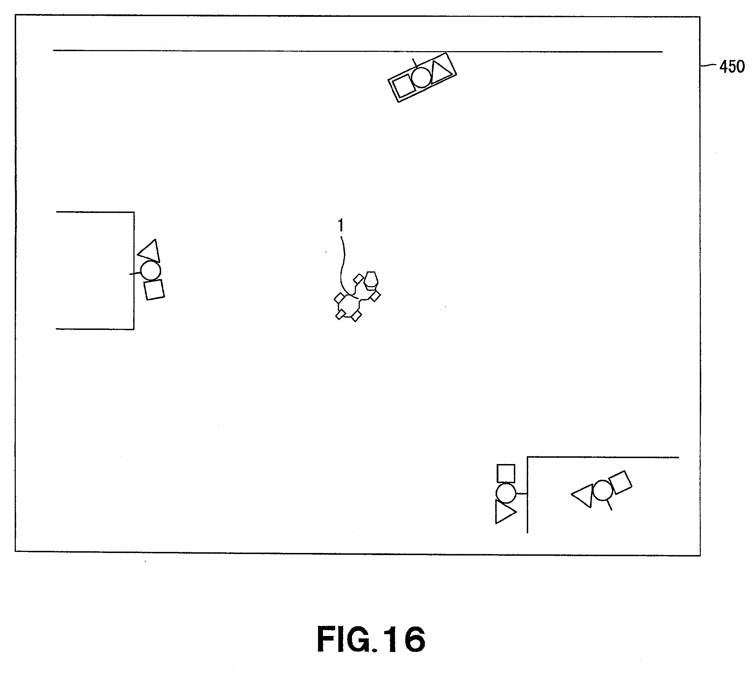

FIG. 15 and FIG. 16 are schematic illustrations of environment maps built by a robot apparatus 1 by exploring in environments and observing positions of landmarks. FIG. 15 shows an instance where landmarks having a same profile (formed by combining an outer circle and an inner circle) are used and FIG. 16 shows an instance where landmarks formed by combining geometric patterns having different profiles as shown in FIG. 8 are used.

Referring to environment 440 shown in FIG. 15, $L11_1$ through $L11_6$ denote the respective positions of proper landmarks and $L12_1$ through $L12_6$ denote the respective positions of proper landmarks that are acquired as a result of the operation of the robot apparatus 1 of observing the landmarks $L11_1$ through $L11_6$ located in the environment 440 and estimating the positions of the landmarks by the above described method. The estimation error is about 10cm.

It is possible to almost accurately estimate the positions of the landmarks in environment 450 of FIG. 16 as in the instance of FIG. 15. Additionally, unlike the use of circular landmarks, it is also possible to detect the direction of each landmark when landmarks realized by combining geometric patterns having different profiles as shown in FIG. 8 are used as in the instance of FIG. 16 so that the robot apparatus 1 can built a more accurate environment map.

2-3. Environment Identifying Section (Environment Identification)

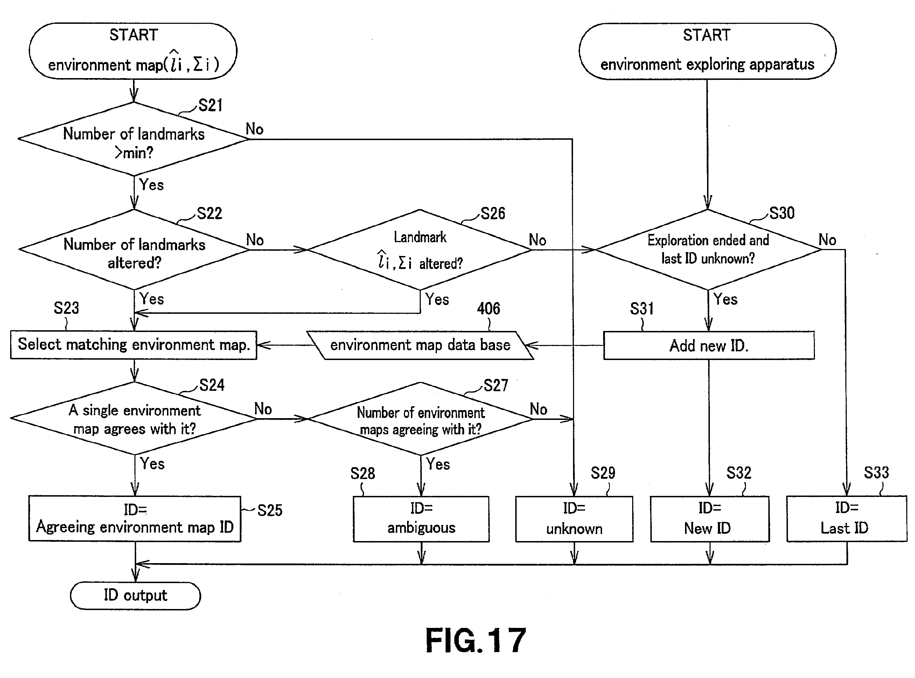

Now, the environment identifying method that is used by the environment identifying section 404 will be described below. The environment identifying section 404 identifies the position where the robot apparatus 1 is currently located by comparing the environment map (map) obtained from the environment map building section 402 and the environment maps (registered environment maps) stored in the environment map data base of the environment map storage section 403. FIG. 17 is a flow chart of the environment identifying method that the environment identifying section 404 uses.

Firstly, as the environment map is input, it is determined if the number of landmarks in the environment map is greater than the defined minimum number (min) of landmarks in the environment, which may be 2 for example, or not (Step S21). If the number of landmarks in the input environment map is greater than the defined minimum number (min) (Step S21: YES), it is determined if the number of landmarks has changed from the last time (Step S22). If it is determined that the number of landmarks has changed from the last time (Step S22; YES), the environment map is compared with the group of environment maps registered in the environment map data base to look for an environment map that resembles the input environment map (Step S23). If an environment map that resembles the input environment map is found (Step S24: YES), the environment ID of the environment map that satisfies the requirement of Step S24 is input as substitute (Step S25).

If, on the other hand, not an environment map that resembles the input environment map is found in Step S24, it is determined if there are a plurality of environment maps that resemble the input environment map or not (Step S27). If it is determined in Step S27 that there are a plurality of environment maps that resembles the input environment map, ambiguous is input as substitute for the environment ID (Step S28). If it is determined in Step S27 that there are not a plurality of environment maps that resemble the input environment map and hence there is not any environment map that resembles the input environment map, unknown is input as substitute for the environment ID (Step S29).

If it is determined in Step S21 that the number of landmarks in the input environment map is smaller than the defined minimum number (min) (Step S21: NO), the processing operation proceeds to Step S29, where known is also input as substitute for the environment ID.

If it is determined in Step S21 that the number of landmarks in the input environment map is greater than the defined minimum number (min) and it is determined in Step S22 that the number of landmarks has not changed from the last time (Step S21: YES, Step S22: NO), it is determined if the input environment map has been changed or not, or the positions of landmarks have been changed or not, (Step S26). If it is determined that the input environment map has been changed (Step S26: YES), the processing operation proceeds to Step S23, where a matching operation is conducted for the environment map. If, on the other hand, it is determined that the input environment map has not been changed (Step S26: NO), the processing operation proceeds to Step S30.

In Step S30, it is determined if the exploring operation is going on or not and the environment ID was unknown last time or not. If the exploring operation has been terminated and the environment ID was unknown last time (Step S30: YES), the input environment map is registered in the environment map data base along with a new environment ID for the input environment map (Step S31) and the newly registered environment ID is input as substitute for the environment ID (Step S32). If, on the other hand, the exploring operation is still going on or the environment ID is not unknown last time in Step S31, the environment ID of the last time is input as substitute for the environment ID (Step S33).

Finally, the environment ID that is input as substitute in Step S25, Step S28, Step S29, Step S32 or Step S33 is output. The branching is provided in Step S21 and in Step S22 in order to omit the environment map matching operation in Step S24 when the input environment map has not been changed from the last time.

The environment map exploring section 405, which will be described in greater detail, manages the state of exploring action of the robot apparatus 1 and determines if the exploration has been ended or not by means of the exploration end flag that is raised when the landmark exploring action is ended in Step S30.

2-3-1. Method of Evaluating Resemblance

Now, the method of evaluating the resemblance between one or more than one environment maps in the data base and the input environment map in Step S24 will be discussed below.

In this embodiment, a Mahalanobis distance W is used to obtain a numerical value for expressing the resemblance between environment maps. A Mahalanobis distance is expressed by formula (23) below to define the distance between two normal distributions X and Y. A minimum Mahalanobis distance W is used as matching error and the extent of resemblance is determined by seeing if the minimum Mahalanobis distance W is not greater than a predetermined threshold value or not. In the formula (23) below, r denotes the Mahalanobis distance.

$$r^2 = (X - Y)^T \Sigma^{-1}(X-Y) \tag{23}$$

The distance (matching error) W between two environment maps (MAP1, MAP2) that are expressed respectively by formulas (24) and (25) below is determined by means of the above formula (23).

$$(\hat{I}, \Sigma) : MAP1 \tag{24}$$

$$(\hat{I}', \Sigma) : MAP2 \tag{25}$$

Since the coordinates of environment map in the world reference system differ from environment to environment map, a degree of freedom exists for rotation and translation between the two distributions. Therefore, if the rotational movement (angle of rotation) and the translational movement between the coordinate system of MAP1 and that of MAP2 are $\omega$ and T respectively, MAP 2 is expressed by formulas (26) and (27) below relative to MAP1.

$$\hat{I}' = R(\omega)\hat{I}'+T \tag{26}$$

$$\Sigma_i = \Sigma_i + R(\omega)\Sigma_i R(\omega)^T \tag{27}$$

The distance (matching error) between MAP 1 and MAP2 is expressed by formula (28) below as a result of putting these formulas in the above formula (23) as substitutes.

$$W = (\hat{l}_i - \hat{l}_i)^T \Sigma^{-1}_i (\hat{l}_i - \hat{l}_i)$$

$$= (\hat{l}_i - (R(\omega)\hat{l}'+T))^T (\Sigma_i + R(\omega)\Sigma_i' R(\omega)^T)^{-1} (\hat{l}_i - (R(\omega)\hat{l}'+T)) \tag{28}$$

It is necessary to determine the angle of rotation $\omega$ and the translational movement T that ultimately minimize the matching error W in order to determine the matching error W. While this is a very difficult problem, the above formula (28) can be approximated by formula (30) below so that the problem can be solved with ease if it is assumed that the covariance value is constant and hence formula (29) below holds true. Then, the Mahalanobis distance W that minimizes the matching error is determined and used for the matching operation in Step S23. If the matching error W is smaller than a predetermined threshold value, the two environment maps are determined to agree with each other.

$$\Sigma_i = cI \tag{29}$$

$$\omega = \tan^{-1} \frac{S_{xy'} - S_{yx'}}{S_{xx'} + S_{yy'}}$$

$$T = \bar{l}' - R(\omega)\bar{l}$$

$$\bar{l} = \frac{1}{n}\sum_i l_i$$

$$\bar{l}' = \frac{1}{n}\sum_i l_i$$

$$\begin{pmatrix} S_{xx'} & S_{yx'} \\ S_{yx'} & S_{yy'} \end{pmatrix} = \sum_i (l_i - \bar{l})(l_i - \bar{l}')^T \qquad \cdots \tag{30}$$

2-4. Environment Map Storage Section (Data base of Environment)

Now, the environment map storage section 403 will be described below. The environment map storage section 403 assigns an environment ID to each environment map output from the environment map building section 402 and stores the environment map and the environment ID as a set. Positive integers (e.g., 1 through 3) that are not duplicate are assigned to respective environments (e.g., Env1 through Env3).

Environment names such as "Taro's room", "Hanako's room" and "washroom (WC)" may be assigned to corresponding numerical environment IDs. Each environment name is acquired as a result of a dialog between the robot apparatus and the user. Such a dialog may take place in a manner as described below.

Example of Dialog:

Robot Apparatus: "Tell me the name of this room."
User: "It's Taro's room here."
Robot Apparatus: "I see. It's Taro's room here."
Since the environment maps and the environment IDs need to be stored after the power supply is turned off, they are stored in the flash memory in the main body of the robot apparatus 1 as a file and the environment map data are restored by reading the file at the time of restarting. It is not necessary that the robot apparatus 1 dynamically acquires all the environment maps. The user may edit and register all or some of the environment maps by some other means.

2-5. Environment Exploring Section (Exploration/Robot Control)

Now, the environment exploring section 405 will be described below. The environment exploring section 405 controls the actions of the robot apparatus 1 and searches for landmarks in order to observe a number of landmarks sufficient for building an environment map. It also notifies the state of exploring act of the robot apparatus 1 as pointed out above.

With the environment identifying method of this embodiment, there may be occasions where it is difficult to accurately identify the environment until all the landmarks in the environment are observed. Then, it is necessary to find out that all the landmarks in the environment have been observed by some means or another. Techniques that can be used to find out that all the landmarks in the environment have been observed include one with which the number of landmarks that are located in an environment is defined in advance and the exploring operation of the robot apparatus 1 is terminated when the robot apparatus 1 has observed the defined number of landmarks, one with which the robot apparatus 1 randomly moves in the environment for a predetermined period of time to observe all the landmarks and terminates the exploring operation, one with which the robot apparatus 1 turns around by 360° at a predetermined position and then terminates the operation of exploring landmarks, one with which the robot apparatus 1 moves to the position of the landmark that is currently being observed, turns around by 360° at that position, then moves to the position of the landmark that can be observed from that position, turns around by 360° at that position and repeats the above cycle of operation until all the landmarks have been visited, one with which the robot apparatus 1 is remotely controlled by the operator so as to observe all the landmarks and terminate the exploring operation and one combining the above described techniques.

Some of the results of an experiment using five typical techniques will be described below. The five techniques include one with which the end of the exploring operation is detected by way of a dialog between the robot apparatus 1 and the user, one with which the number of landmarks that are located in an environment is defined in advance, one with which the robot apparatus 1 randomly moves in the environment for a predetermined period of time, one with which the robot apparatus 1 turns around by 360° at a predetermined position and one with which the robot apparatus 1 visits all the detected landmarks.

2-5-1. Instructional Dialog Given by the User

In a situation where the robot apparatus 1 is moving around in the environment according to an instruction given by the user by way of a remote control or according to its own will, the robot apparatus 1 recognizes that it has observed all the landmarks in the environment as a result of a dialog between the robot apparatus 1 and the user.

An example of dialog between the robot apparatus 1 and the user is shown below.

Example of Dialog:

Robot Apparatus: "There are four landmarks, right?"
User: "No, there are six landmarks."
Robot Apparatus: "Then, two more landmarks to be observed, right?"
User: "Right."
The robot apparatus 1 moves further to search for landmarks.
Robot Apparatus: "There are six landmarks, right?"
User: "Right."

2-5-2. When the Number of Landmarks in the Environment is Defined

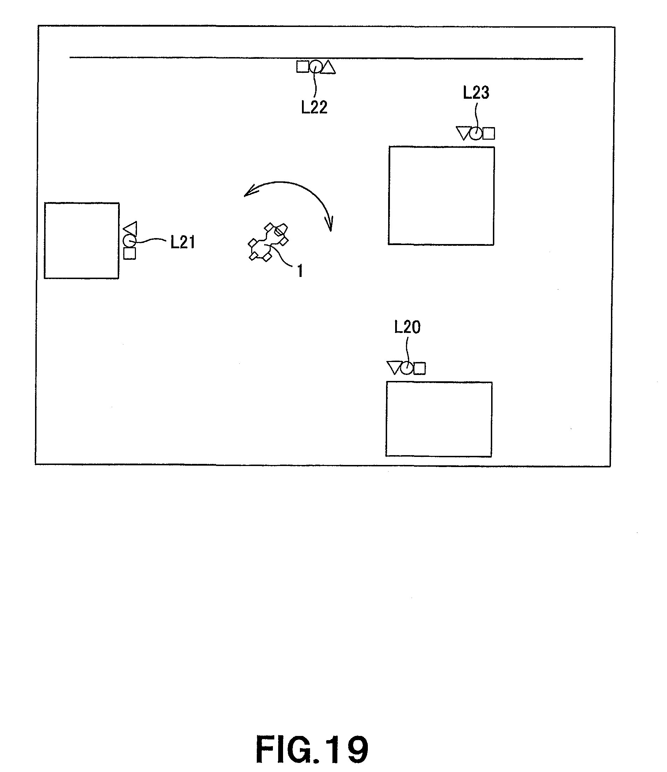

The number N of landmarks in an environment is defined and the robot apparatus 1 is in a state of exploring action until it finds N landmarks. When the number of landmarks contained in the environment map of the robot apparatus 1 has become equal to or greater than N, the robot apparatus 1 goes out of the state of exploring action and raises an exploration end flag. For example, four is defined for the number of landmarks as in the case of FIG. 19 so that the robot apparatus 1 is in a state of exploring action until it finds four landmarks and hence continues the exploring action.

2-5-3. When the Robot Apparatus Randomly Moves Around in the Environment for a Predetermined Period of Time

The robot apparatus 1 randomly moves around in an environment and finds out as many landmarks as it can during a predetermined period of time. When the predetermined period of time has passed, it goes out of the state of exploring act and raises an exploration end flag. For example, in the case of FIG. 19, the robot apparatus 1 performs an exploring action for the predetermined period of time (e.g., several minutes). The predetermined period of time is defined preferably by taking the size of the environment and the number of landmarks into consideration.

2-5-4: When the Robot Apparatus Turns Around by 360° at a Predetermined Position

The robot apparatus 1 turns around by 360° at a predetermined position (e.g., at or near the center of the environment) and observes landmarks. Then, it terminates the exploring action. For example, in the case of FIG. 19, the robot apparatus 1 turns around by 360° at a predetermined position and terminates the landmark searching action when it has found all the observable landmarks L20 through L22. In the case of FIG. 19, the robot apparatus 1 cannot find out the landmark L23.

2-5-5: Exploring Action for Searching Landmarks

The robot apparatus 1 visits all the landmarks it finds in order to find out as many landmarks as it can in the environment. Firstly, it starts from a spot in the environment and randomly walks around in the environment. Then, it turns around by 360° at an appropriate spot. It forms a queue of the landmarks it has found. Then, it selects a landmark out of the queue and walks down to the landmark. When it gets to the landmark, it deletes the landmark out of the queue of the landmarks to be visited and looks all around at or near the landmark to find a new landmark. The newly found landmark is added to the queue of the landmarks to be visited. The robot apparatus 1 walks to each of the landmarks repeatedly until the queue of the landmarks to be visited is completely deleted. If there is not a landmark that cannot be observed from any other landmark, this strategy makes it possible to find all the landmarks in the environment. In the case of an environment as shown in FIG. 19, the robot apparatus 1 firstly looks around by 360° and forms a queue of the landmarks L20 through L22 to be visited that it has found. Then, it selects a landmark out of the queue and walks down to the landmark. Eventually, it looks around at or near the landmark L22 to find out a new landmark L23 and adds it to the queue of the landmarks to be visited.

In this embodiment, the robot apparatus 1 has a landmark sensor (landmark recognizing means) for recognizing any of the plurality of artificial landmarks existing in an identifiable unique environment that are differentiated from each other in terms of profile and/or color, a storage means for storing the acquired information on the landmarks it has found by means of the landmark sensor and a behavior storage means for storing the behavior of the robot apparatus 1 itself so that it can build a geometrical environment map by means of the landmark sensor and the behavior storage device.

The robot apparatus 1 also can identify the environment in which it is currently situated by comparing the environment map N of the current environment it has built on the basis of the observation of landmarks and the known group of environment maps stored in the environment map storage section 403. The known environment maps may be those prepared by the user or those learnt by the robot apparatus 1. Environment maps contain individual landmarks, the position of each of which is expressed by (x, y). Environment maps are compared by comparing the position of each of the landmarks that are being observed and contained in the environment map being prepared and that of the same landmark in each of the known environment maps and evaluating the similarity of the two positions.

Additionally, the robot apparatus 1 explores the environment and builds an environment map by means of a robot control technique of telling the end of the exploring operation when it is over. Then, it outputs the degree of similarity between the environment map and each of the environment maps stored in the storage device. Subsequently, it identifies the environment by outputting the environment ID of the environment map that shows a degree of similarity exceeding a threshold value. If there is no environment map that resembles the newly built environment map and stored in the data base when the exploring operation is over, it adds the new environment map and the corresponding environment ID to the environment map storage section 403.

Still additionally, as the robot apparatus 1 stores a plurality of identifiable unique environment maps, it can quickly identify a plurality of environments that are physically separated from each other (e.g., room A and room B located at respective places that are physically separated from each other by a significant distance). Thus, if compared with an arrangement where the robot apparatus 1 stores a large environment map that contains all the environments, the load of computations that is applied to the robot apparatus 1 is reduced and also the volume of computations that the robot apparatus 1 has to perform to update the environment map when it finds out that a landmark or the robot apparatus 1 itself has moved is also reduced. Furthermore, a map of place A and that of place B that are physically separated from each other are stored as environment maps MapA and MapB so that the robot apparatus 1 can remain unconcerned about the relative positional relationship of the two places. Finally, the robot apparatus 1 can identify the current environment from a certain amount of information if it does not recognize all the landmarks in the environment. Thus, the robot apparatus 1 can quickly identify the current environment and also its own position in the environment by building an environment map for each environment and dynamically comparing it with a group of environment maps that are registered and stored in the storage means.

3. Details of the Robot Apparatus

3-1. Software

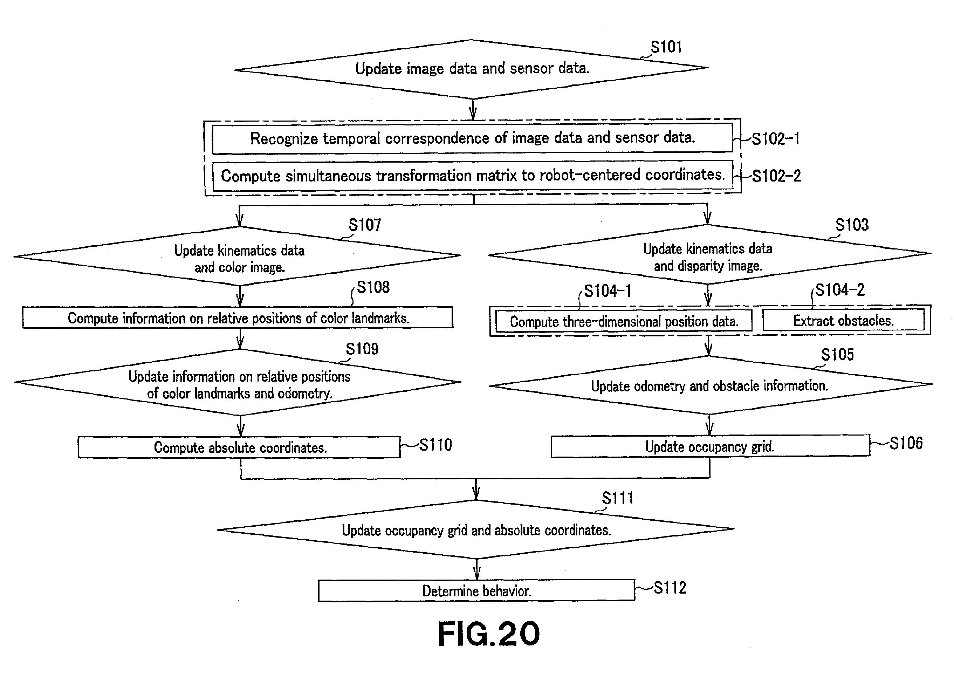

Now, the configuration and the operation of the software for determining the action to be taken by the robot apparatus 1 that is illustrated in FIG. 4 will be described below in detail. FIG. 20 is a flow chart of the operation of the software 300 shown in FIG. 4.

As described above, the image data 301 and the sensor data 302 are input to the kinematic odometry KINE310 of the software 300 illustrated in FIG. 4. The image data 301 is in fact a color image and a disparity image obtained by the stereo camera. The sensor data 302 is in fact the data on the joint angles and the like of the robot apparatus 1. The kinematic odometry KINE310 receives these input data 301, 302 and updates the corresponding images and the corresponding sensor data stored in the memory (Step S 101).

Then, the kinematic odometry KINE310 recognizes the temporal correspondence between the image data 301 and the sensor data 302 (Step S102-1). More specifically, it detects the joint angles in the sensor data 302 that are taken when the image of the image data 301 is picked up. Then, it transforms the robot-centered coordinate system whose origin is fixed to the robot apparatus 1 into the coordinate system of the camera fitted to the head unit of the robot apparatus 1, using the data on the joint angles (Step S102-2). At this time, a simultaneous transformation matrix is led out for the transformation from the robot-centered coordinate system into the camera coordinate system and the simultaneous transformation matrix 311 and the corresponding image data are transmitted to the object that is responsible for image recognition. More specifically, the simultaneous transformation matrix 311 and the corresponding disparity image 312 are output to the plane extracting section PLEX320, while the simultaneous transformation matrix 311 and the corresponding color image 313 are output to the landmark sensor CL340.

Additionally, the quantity of movement of the robot apparatus 1 is computed from the walk parameters obtained from the sensor data 302 and the count of the steps obtained by using sole sensors to determine the quantity of movement of the robot apparatus 1 in the robot-centered coordinate system. The quantity of movement in the robot-centered coordinate system is also referred to as odometry. Then, the odometry 314 is output to the occupancy grid computing section OG330 and the absolute coordinates computing section LZ350.

As the plane extracting section PLEX320 receives the simultaneous transformation matrix 311 computed by the kinematic odometry KINE310 and the corresponding disparity image 312 obtained by the stereo camera as input, it updates the corresponding data stored in the memory (Step S 103). Then, it computationally obtains three dimensional position data (range data) from the disparity image 312, using the calibration parameter of the stereo camera (Step S104-1). Thereafter, it extracts a plane other than the planes of walls and tables, typically using Hough transformation. Additionally, it detects the correspondence between the extracted plane and the plane on which either or both of the soles of the robot apparatus 1 are placed from the simultaneous transformation matrix 311. Then, it selects the floor surface and an object that is not found on the floor surface and separated from the floor surface by a distance greater than a predetermined threshold value as obstacle and computes the distance from the floor surface. Thereafter, it outputs information on the obstacle 321 to the occupancy grid computing section OG330 (Step S 104-2).

As the occupancy grid computing section OG330 receives the odometry 314 computed by the kinematic odometry KINE310 and the information on the observation of the obstacle (obstacle information) 321 computationally determined by the plane extracting section PLEX320 as input, it updates the corresponding data stored in the memory (Step S105). Then, it updates the occupancy grid holding the probability of existence of an obstacle on the floor by means of a probabilistic technique (Step S106).

The occupancy grid computing section OG330 holds obstacle information (environment map) on a 4m area surrounding and centered at the robot apparatus 1 and attitude information showing the direction that the robot apparatus 1 faces and updates the environment map by means of a probabilistic technique. Then, it outputs the updated result of recognition (obstacle information 331) to prepare a plan for avoiding obstacles in the uppermost layer, which is route plan determining section SBL360 in this embodiment.

As the landmark sensor section CLS340 receives the simultaneous transformation matrix 311 and the color image 313 from the kinematic odometry KINE310 as input, it updates the corresponding data stored in the memory in advance (Step S107). Then, it processes the color image 313 and detects color landmarks it is trained to recognize in advance. Thereafter, it transforms the position and size of each of the color landmarks on the color image 313 into the corresponding position in the camera coordinate system. Additionally, it transforms the position of each of the color landmarks in the camera coordinate system into the position in the robot-centered coordinate system and outputs information on the color landmarks in the robot-centered coordinate system (color landmark relative position information) 341 to the absolute coordinates computing section LZ350 (Step S108).

As the absolute coordinates computing section LZ350 receives the odometry 314 from the kinematic odometry KINE310 and the color landmark relative position information 341 from the landmark sensor section CLS340 as input, it updates the corresponding data stored in the memory in advance (Step S109). Then, the absolute coordinates computing section LZ350 computes the absolute coordinates (the position in the world coordinate system) of the robot apparatus 1 by means of a probabilistic technique, using the absolute coordinates of the color landmarks it is trained to recognize in advance (the positions in the world coordinate system), the color landmark relative position information 341 and the odometry 314. Thereafter, it outputs the positions in the absolute coordinate system 351 to the route plan determining section SBL360.

As the route plan determining section SBL360 receives the occupancy grid information 331 from the occupancy grid computing section OG330 and the positions in the absolute coordinate system 351 from the absolute coordinates computing section LZ350 as input, it updates the corresponding data stored in the memory in advance (Step S111). Then, the route plan determining section SBL360 acquires the result of recognition about the obstacles existing around the robot apparatus 1 out of the obstacle information 331 from the occupancy grid computing section OG330 and the absolute coordinates of the current position of the robot apparatus 1 from the absolute coordinates computing section LZ350 to generate a route plan for a route along which the robot apparatus 1 can walk and get to the destination that is indicated by the absolute coordinate system or the robot-centered coordinate system centered at the robot apparatus without colliding with any obstacles and issue an action command for getting to the destination by way of the route indicated in the generated route plan. In short, the route plan determining section SBL360 determines the action that the robot apparatus 1 has to take depending on the situation recognized on the basis of the input data and outputs the string of actions (Step S 112).

When the robot apparatus 1 is navigated by the user, it provides the user with the result of recognition on the obstacles existing around the robot apparatus 1 input from the occupancy grid computing section OG330 and the absolute coordinates of the current position of the robot apparatus 1 input from the absolute coordinates computing section LZ350 and has the route plan determining section SBL360 issue an action command according to the input from the user.

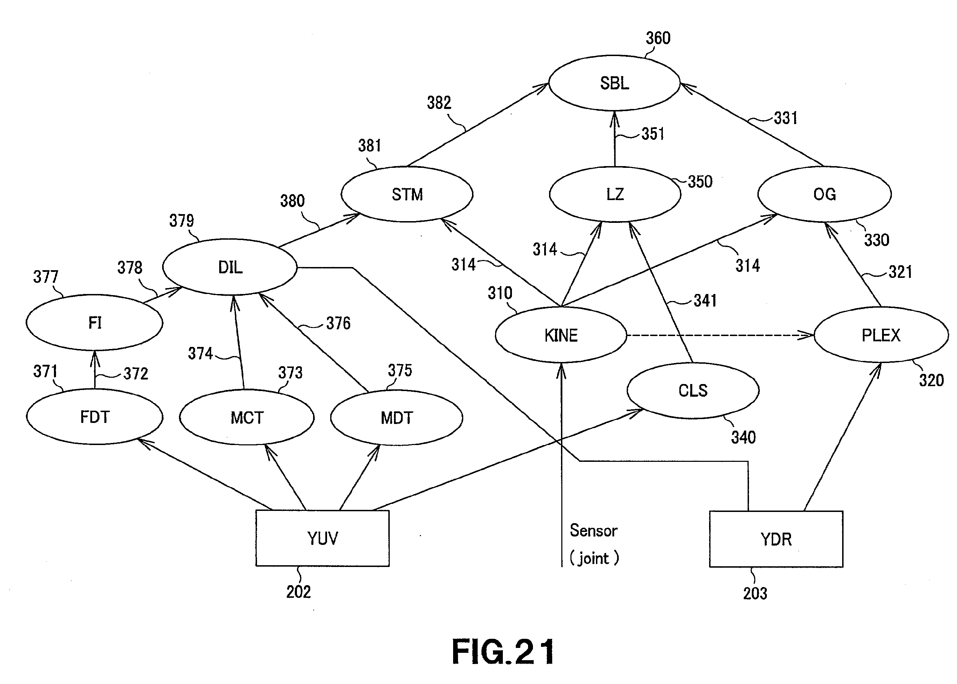

FIG. 21 is a schematic illustration of the flow of data input to the software of FIG. 20. In FIG. 21, the components same as or similar to those of FIGS. 3 and 4 are denoted respectively by the same reference symbols and will not be described any further.

Referring to FIG. 21, face detecting section (face detector) FDT371 is an object for detecting one or more than one face regions in the frame of an image. It receives a color image 202 from an image input device such as camera and dimensionally reduces it into a scale image of any of nine steps, for example. Then, it searches for rectangular regions that may correspond to so many faces. Then, it eliminates overlapping candidate regions and outputs information 372 on the position, the size and the characteristic quantity of each region that is ultimately judged to be a face so as to transmit it to the face identifying section (face identify) FI377.

The face identifying section FI377 is an object for identifying each detected face image. It receives information 372 on the images of the rectangular region that may correspond to so many faces from the face detecting section FDT371 and compares each of the images with each of the persons in the person dictionary it has and stored in the memory to identify the face image. Then, it outputs ID information 378 of the identified person to DIL379 along with the information on the position and the size of the face image region in the face image received from the face detecting section EDT371.

Color recognizing section (multicolor tracker) MCT373 is an object for recognizing colors. It receives a color image 202 from an image input device such as camera. Then, it extracts color regions according to the information on a plurality of color models it holds in advance and divides the color image into continuous regions. The color recognizing section MCT373 outputs information 374 on the position, the size and the characteristic quantity of each region to distance information adding section (distance information linker) DIL379.

Motion detecting section (motion detector) MDT375 is an object for detecting moving parts in the image and outputs information 376 on the detected moving regions to the distance information adding section DIL379.

The distance information addition section DIL379 is an object for adding distance information to the input two-dimensional information and outputting three-dimensional information. More specifically, it adds distance information to the information 374 on the position, the size and the characteristic quantity of each region from the color recognizing section MCT373 and also to the information 376 on the detected moving regions from the motion detecting section MDT375 and outputs three-dimensional information 380 to short term storage section (short term memory) STM381.

The short term storage section STM381 is an object for holding information on the external environment of the robot apparatus 1 for a relatively short period of time. It receives the result of voice recognition (words, direction of sound source, degree of confidence) from arthur decoder (not shown), the positions and the sizes of skin color regions and the positions and the sizes of face regions from the color recognizing section MCT373 and ID information on persons from the face identifying section FI377. It also receives the direction of the neck (joint angle) of the robot apparatus from the sensors arranged on the machine of the robot apparatus 1. Then, it stores information on what person is currently at what position, what person is currently speaking and what dialog is made with that person, using the results of recognitions and the sensor outputs in a coordinated manner. Then, it delivers physical information on such objects, or targets, and information on the events (history) as viewed in a temporal direction to upper modules including the route plan determining section (situation-dependent action layer) (SBL) 360 as output.

The route plan determining section SBL is an object for determining the action (situation-dependent action) of the robot apparatus 1 on the basis of the information from the above described short term storage section STM381. It can evaluate and carry out a plurality of actions simultaneously. It can also switch an action to hold the machine in a sleeping state and start a different action.

3-2. Configuration of Robot Apparatus

Now, the bipedal locomotion type robot apparatus as shown in FIG. 1 that is mounted with an environment identifying apparatus of the above described embodiment will be described in greater detail. The humanoid type robot apparatus is a commercial robot designed to support human activities in various scenes in daily lives including living environments. It is an entertainment robot that can act in response to its internal state (anger, sadness, joy, pleasure) and do basic actions of man.

As pointed out above, in the robot apparatus 1 illustrated in FIG. 1, a head unit 3 is linked to a predetermined position of a trunk unit 2 of the robot apparatus. Paired Left and right ann units 4R/L and paired left and right leg units 5R/L are also linked to the trunk unit 2 of the robot apparatus.

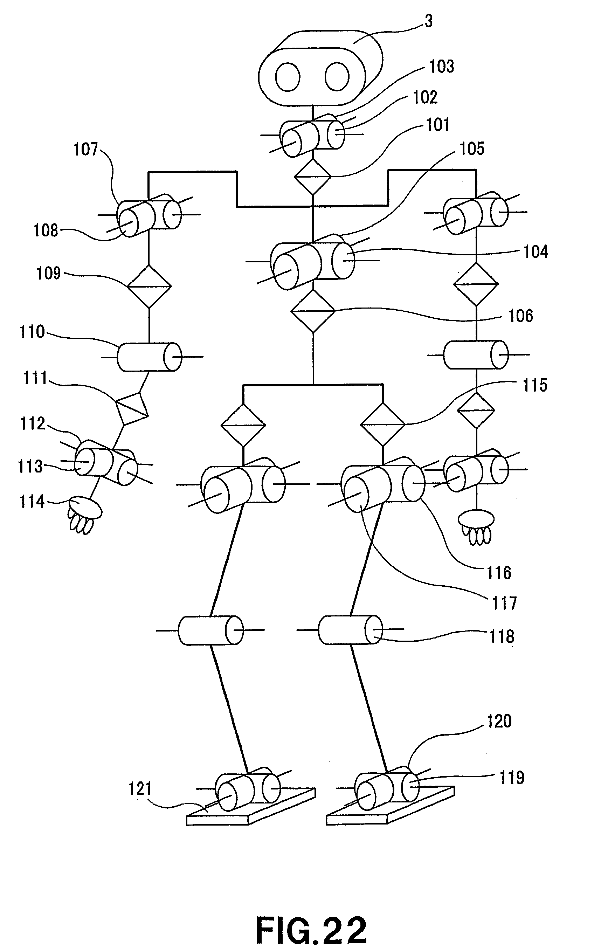

FIG. 22 is a schematic illustration of the degrees of freedom of each joint of an embodiment of the robot apparatus 1. The neck joint that supports the head unit 3 has three degrees of freedom realized by a neck joint yaw axis 101, a neck joint pitch axis 102 and a neck joint roll axis 103.

Each of the arm units 4R/L of the upper limbs includes a shoulder joint pitch axis 107, a shoulder joint roll axis 108, an upper arm yaw axis 109, an elbow joint pitch axis 110, a forearm yaw axis 111, a wrist joint pitch axis 112, a wrist joint roll ring 113 and a hand section 114. The hand sections 114 are in fact multi-joint/multi-freedom-degree structures having a plurality of fingers. Note, however, the actions of the hands 114 of the robot apparatus 1 neither contribute to nor influence significantly the posture control and the walk control of the robot apparatus 1 so that the hands 114 are assumed to have zero-degrees of freedom in this embodiment. Therefore, each arm units has seven degrees of freedom.

The trunk unit 2 has a trunk pitch axis 104, a trunk roll axis 105 and a trunk yaw axis 106 to realize three degrees of freedom.

Each of the leg units 5R/L of the lower limbs includes a hip joint yaw axis 115, a hip joint pitch axis 116, a hip joint roll axis 117, a knee joint pitch axis 118, an ankle joint pitch axis 119, an ankle joint roll axis 120 and a foot section 121. The intersections of the hip joint pitch axes 116 and the hip joint roll axes 117 define the position of the hip joint of the robot apparatus 1 in this letter of specification. While the feet 121 of man include soles that are in fact multi-joint/ multi-freedom-degree structures, the soles of the robot apparatus 1 are assumed to have zero-degrees of freedom in this embodiment. Therefore, each unit has six degrees of freedom.

All in all, the robot apparatus 1 has a total of $3 + 7 \times 2 + 3 + 6 \times 2 = 32$ degrees of freedom as a whole. However, all robot apparatus 1 for entertainment are not necessarily limited to 32 degrees of freedom. The degrees of freedom, or the number of joints, may be increased or decreased appropriately depending on the restricting conditions for designing and building the robot apparatus and the requirements of the specification of the robot apparatus.

As pointed out earlier, the degrees of freedom of the robot apparatus 1 are realized by actuators that are mounted on the robot apparatus 1. The actuators are preferably small and lightweight to meet the requirements of designing and building the robot apparatus including that it does not have excessively swollen parts so as to make it appear like an ordinary man and that the unstable structure of a bipedal locomotion robot apparatus needs to be stably controlled for its posture.

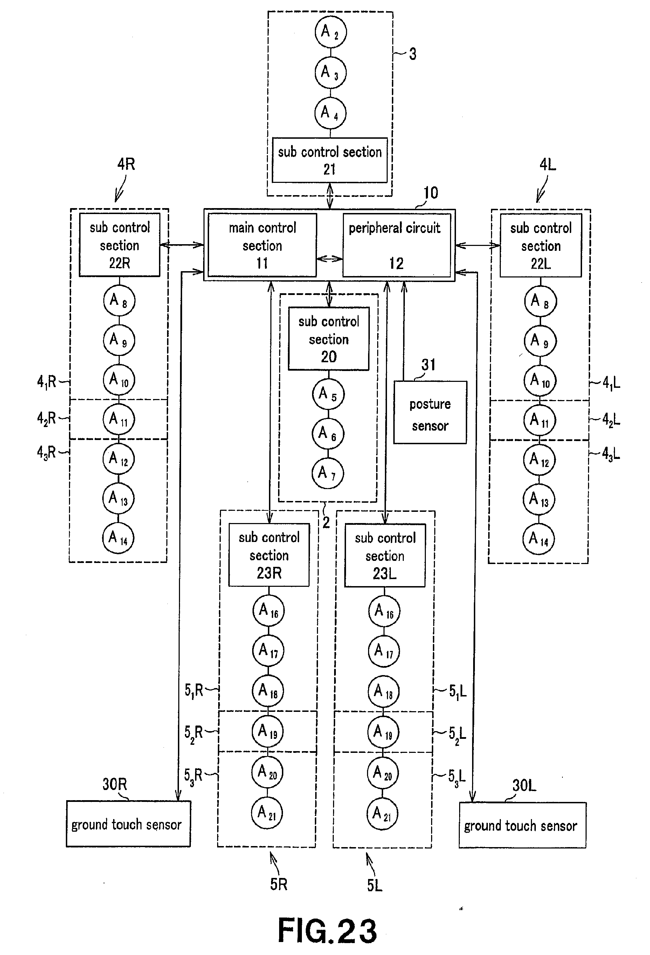

FIG. 23 is a schematic block diagram of the control system of the robot apparatus 1 of FIG. 22. As shown in FIG. 23, the robot apparatus 1 comprises a trunk unit 2, a head unit 3, arm units 4R/L, leg units 5R/L, which units corresponds to those of the human body, and a control unit 10 which operates for adaptability control in order to realize coordinate motions of the units.

The entire actions of the robot apparatus 1 are comprehensively controlled by the control unit 10. The control unit 10 has a main control section 11 including a CPU (central processing unit), a DRAM, a flash ROM and other principal circuit components (not shown) and a peripheral circuit 12 including interfaces (not shown) for exchanging data and commands with the power supply circuit and the components of the robot apparatus 1.

The position of arrangement of the control unit 10 is not particularly restricted from the viewpoint of embodying the present invention. While the control unit 10 is mounted in the trunk unit 2 in FIG. 23, it may alternatively be mounted in the head unit 3. Still alternatively, the control unit 10 may be arranged outside the robot apparatus 1 so as to communicate with the machine body of the robot apparatus 1 by way of wires or wirelessly.

The degrees of freedom of each joint in the robot apparatus 1 of FIG. 22 are realized by so many corresponding actuators. More specifically, the head unit 3 is provided with a neck joint yaw axis actuator $A_2$, a neck joint pitch axis actuator $A_3$ and a neck joint roll axis actuator $A_4$ respectively for the neck joint yaw axis 101, the neck joint pitch axis 102 and the neck joint roll axis 103.

Additionally, the head unit 3 is provided with CCD (charge coupled device) cameras for picking up images of external views of the robot apparatus 1 along with a distance sensor for metering the distance of each object located in front of the robot apparatus 1, a microphone for collecting external sounds, a speaker for outputting voices and touch sensors for detecting the pressure applied by a physical action taken by the user such as "stroking" or "beating".

The trunk unit 2 is provided with a trunk pitch axis actuator $A_5$, a trunk roll axis actuator $A_6$ and a trunk yaw axis actuator $A_7$ respectively for the trunk pitch axis 104, the trunk roll axis 105 and the trunk yaw axis 106. Additionally, the trunk unit 2 is provided with a battery that operates as starting power source of the robot apparatus 1. The battery is formed by rechargeable/dischargeable cells.

The arm units 4R/L include upper ann units $4_1$R/L, elbow joint units $4_2$R/L and forearm units $4_3$R/L. They are provided with shoulder joint pitch axis actuators $A_8$, shoulder joint roll axis actuators $A_9$, upper arm yaw axis actuators $A_{10}$, elbow joint pitch axis actuators $A_{11}$, elbow joint roll axis actuators $A_{12}$, wrist joint pitch axis actuators $A_{13}$, wrist joint roll axis actuators $A_{14}$ respectively for the shoulder joint pitch axes 107, the should joint roll axes 108, the upper arm yaw axes 109, the elbow joint pitch axes 110, the forearm yaw axes 111, the wrist joint pitch axes 112 and the wrist joint roll axes 113.

The leg units 5R/L include thigh units $5_1$R/L, knee units $5_2$R/L and shank units $5_3$R/L. They are provided with hip joint yaw axis actuators $A_{16}$, hip joint pitch axis actuators $A_{17}$, hip joint roll axis actuators $A_{18}$, knee joint pitch axis actuators $A_{19}$, ankle joint pitch axis actuators $A_{20}$ and ankle joint roll axis actuators $A_{21}$ respectively for the hip joint yaw axes 115, the hip joint pitch axes 116, the hip joint roll axes 117, the knee joint pitch axes 118, the ankle joint pitch axes 119 and the ankle joint roll axes 120. Preferably, the actuators $A_2$, $A_3$, ...that are used for the corresponding joints are small AC servo actuators of a type directly coupled to the gear in which the servo control system is realized as one-chip and mounted in the motor unit.

The mechanical units including the trunk unit 2, the head unit 3, the arm units 4R/L and the leg units 5R/L are provided respectively with sub control sections 20, 21, 22R/L, 23R/L, which belong to an actuator drive control section. The leg units 5R/L are provided respectively with ground touch sensors 30R/L for detecting if either or both of the soles of the leg units 5R/L touch the floor surface or not, while the trunk unit 2 is equipped in the inside thereof with a posture sensor 31 for gauging the posture of the robot apparatus 1.

The ground touch sensors 30R/L are typically formed by using proximity sensors or micro-switches arranged on the respective soles. The posture sensor 31 is typically formed by using a combination of an acceleration sensor and a gyro sensor.

The robot apparatus 1 can determine if each of the left and right legs is currently standing on the floor or suspended idly from the outputs of the ground touch sensors 30R/L. It can also detect the inclination and the posture of the trunk section from the output of the posture sensor 31.

The main control section 11 can dynamically correct the control targets in response to the outputs of the sensors 30R/L and 31. More specifically, the main control section 11 appropriately controls the sub control sections 20, 21, 22R/L and 23R/L to realize a motion pattern of the whole body, driving the upper limbs, the trunk and the lower limbs in a coordinated manner.

To realize a motion of the entire body of the robot apparatus 1, motions of the feet, a ZMP (zero moment point) trajectory, a trunk motion, motions of the upper limbs and the height of the waist need to be defined and commands for actions conforming to these definitions have to be transferred to the sub control sections 20, 21, 22R/L, and 23R/L. Then, the sub control sections 20, 21, ... interpret the commands they receive from the main control section 11 and output drive control signals to the actuators A2, $A_3$, .... The expression of "ZMP" as used herein refers to a point on the floor surface where the moment due to the reaction force of the floor becomes zero when the robot apparatus is walking. The expression of "ZMP trajectory" as used herein refers to the trajectory of the ZMP when the robot apparatus 1 is walking. The concept of ZMP and application thereof to the norm for determining the stability of a walking robot are described in Miomir Vukobratovic, "LEGGED LOCOMOTION ROBOTS" (Kato Ichiro et al, Nikkan Kogyo Shinbunsha).

As described above, the sub control sections 20, 21, ... of the robot apparatus 1 interpret the commands they receive from the main control section 11 and output drive control signals to the actuators $A_2$, $A_3$, ... to drive and control the units of the robot apparatus 1. As a result, the robot apparatus 1 can stably transit to a target posture and walk with a stabilized posture.

The control unit 10 of the robot apparatus 1 comprehensively processes the information from the various sensors including the acceleration sensor, the touch sensors, the ground touch sensors and other sensors, the image information from the CCD cameras, the sound information from the microphone and so on in addition to the above described posture control operation. Although not specifically illustrated, the acceleration sensor, the gyro sensor, the touch sensors, the distance sensor, the sensors of the microphone and the speaker, the actuators, the CCD cameras and the battery are connected to the main control section 11 by way of corresponding hubs in the control unit 10.

The main control section 11 sequentially takes in the sensor data, the image data and the sound data supplied from the above described sensors and stores them in predetermined respective positions in the DRAM by way of an internal interface. Additionally, the main control section 11 takes in the remaining battery power data supplied from the battery and stores them in predetermined respective positions in the DRAM. The sensor data, the image data, the sound data and the remaining battery power data stored in the DRAM are then used when the main control section 11 controls the motions of the robot apparatus 1.

When power is supplied initially to the robot apparatus 1, the main control section 11 reads out the control program and stores it in the DRAM. Additionally, the main control section 11 judges the situation of itself, that of the surroundings and presence or absence of an instruction and/or an action given to the robot apparatus 1 from the user according to the sensor data, the image data, the sound data and the remaining battery power data stored in the DRAM by the main control section 11.

Still additionally, the main control section 11 determines its own action in response to its own situation according to the judgment it has made and the control program stored in the DRAM and has the robot apparatus 1 take an action of a "bodily gesture" and/or a "hand waving gesture" by driving the related actuators on the basis of the outcome of what it determines.

In this way, the robot apparatus 1 can judge its own situation and that of the surroundings according to the control program and autonomously behave in response to the instruction and/or the action given to it from the user.

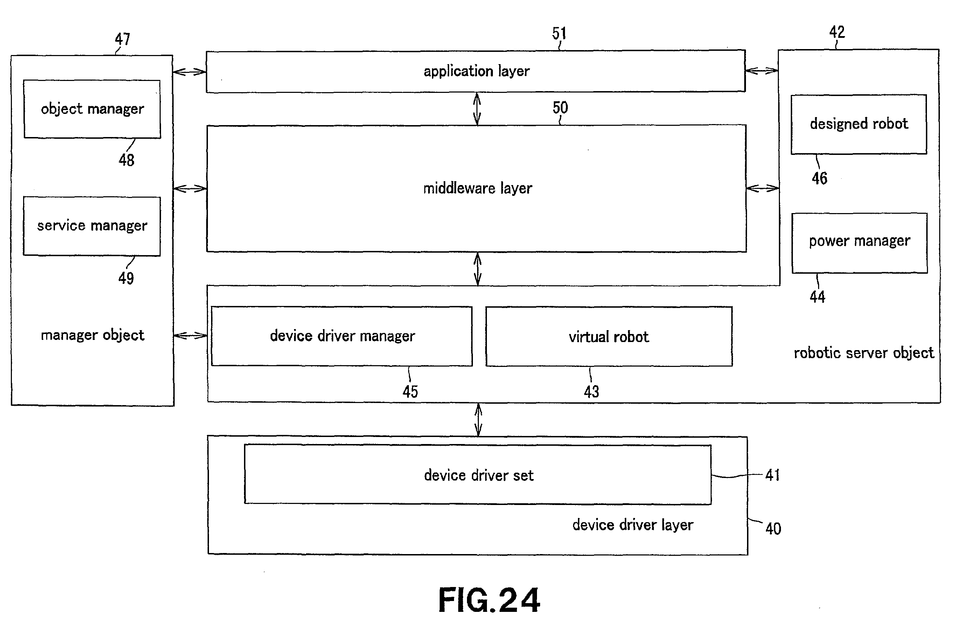

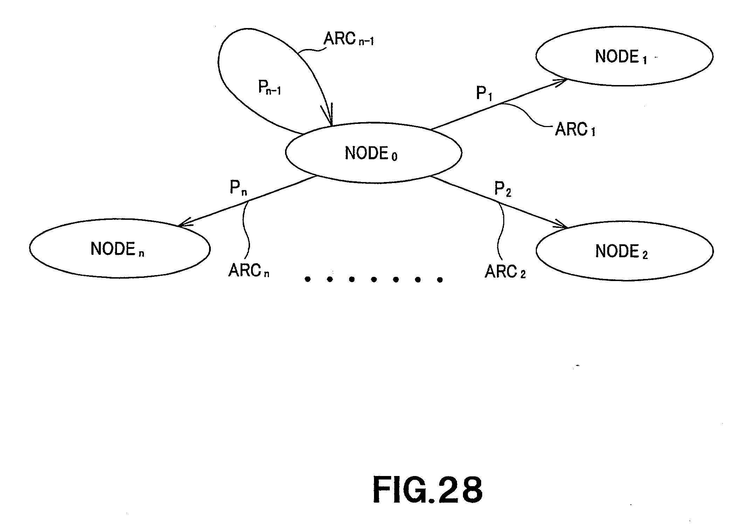

Meanwhile, the robot apparatus 1 can also autonomously behave in response to the internal state thereof. The software described above by referring to FIGS. 4, 20 and 21 are mainly designed for the robot apparatus 1 to autonomously generates the route it follows. The software configuration of the control program of the robot apparatus 1 will be described below by referring to FIGS. 24 through 29. The control program is stored in advance in the flash ROM arranged in the robot apparatus 1 and read out when power is supplied initially to the robot apparatus 1 from the power source.

Referring to FIG. 24, device driver layer 40 is arranged as the lowermost layer of the control program and includes a device driver set 41 of a plurality of device drivers. Each device driver is an object authorized to directly access the hardware such as CCD cameras or timers that are used in ordinary computers. It executes a processing operation in response to an interrupt by the corresponding hardware.

Robotic server object 42 is arranged above the lowermost layer of the device driver layer 40 and includes a virtual robot 43 formed by a group of pieces of software that provides an interface for accessing hardware including the various sensors and the actuators $28_1$ through $28_n$, a power manager 44 formed by a group of pieces of software for managing the operation of switching the power supply, device driver manager 45 formed by a group of pieces of software for managing other various device drivers and a design robot 46 formed by a group of pieces of software for managing the mechanism of the robot apparatus 1.

Manager object 47 is formed by an object manager 48 and a service manager 49. The object manager 48 is a group of pieces of software for managing starts and ends of operation of each of the groups of pieces of software contained in the robotic server object 42, the middleware layer 50 and the application layer 51 while the service manager 49 is a group of pieces of software for managing the connections of the various objects according to the information on inter-object connections described in the connection file that is stored in a memory card.

The middleware layer 50 is located above the robotic server object 42 and formed by a group of pieces of software that provides the basic features of the robot apparatus 1 such as the image processing feature and the sound processing feature. The application layer 51 is located above the middleware layer 50 and formed by a group of pieces of software for determining the action of the robot apparatus 1 to be taken according to the outcome of the processing operations executed by the group of pieces of software of the middleware layer 50.

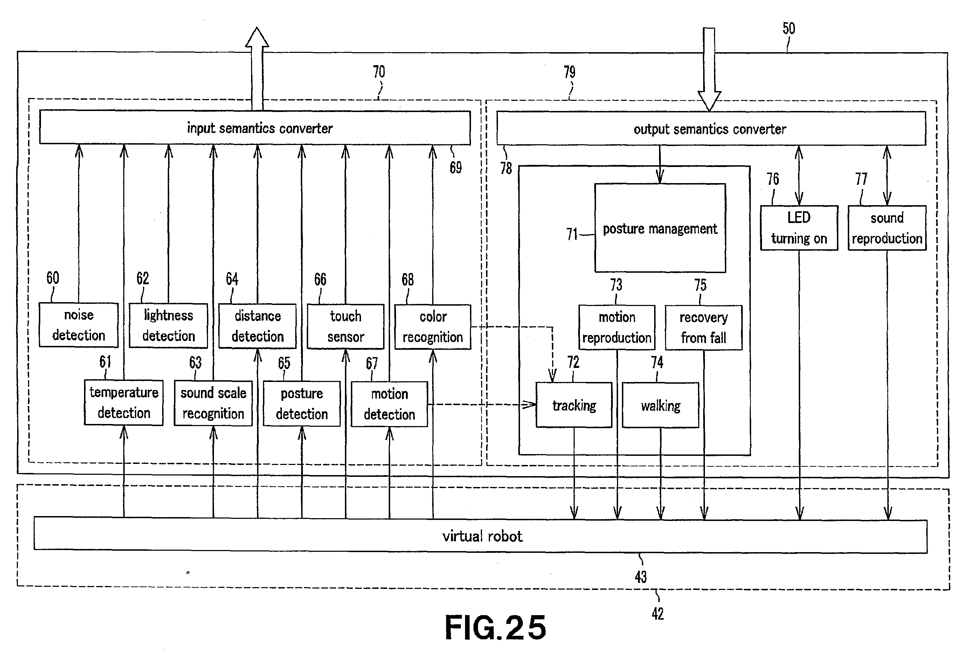

FIG. 25 is a schematic block diagram of the middleware layer 50 and that of the application layer 51 of the robot apparatus.

As shown in FIG. 25, the middleware layer 50 includes a recognition system 70 having signal processing modules 60 through 68 for noise detection, for temperature detection, for lightness detection, for sound scale recognition, for distance detection, for posture detection, for the touch sensors, for motion detection and for color recognition and an input semantics converter module 69 and an output system 79 having an output semantics converter module 78 and signal processing modules 71 through 77 for posture management, for tracking, for motion reproduction, for walking, for recovery from a fall, for turning on LEDs and for sound reproduction.

The signal processing modules 60 through 68 of the recognition system 70 take in the data such as the sensor data, the image data and the sound data read out from the DRAM by the virtual robot 43 of the robotic server object 42, process them in a predetermined manner and supply the outcome of the processing operations to the input semantics converter module 69. Note that the virtual robot 43 is formed so as to take the role of exchanging or transforming signals according to a predetermined communication protocol.

The input semantics converter module 69 recognizes the situation of the robot apparatus 1 itself, that of the surroundings, presence or absence of an instruction and/or an action given to the robot apparatus 1 from the user according to the outcome of the processing operations supplied from the signal processing modules 60 through 68. Such situations, such an instruction and/or such an action may include "noisy", "hot", "bright", "A ball is detected.", "A fall is detected.", "stroked", "beaten", "The musical scales of Do, MI, So are heard.", " A moving object is detected." and/or "An obstacle is detected." Then, it outputs the outcome of the recognition to the application layer 41.

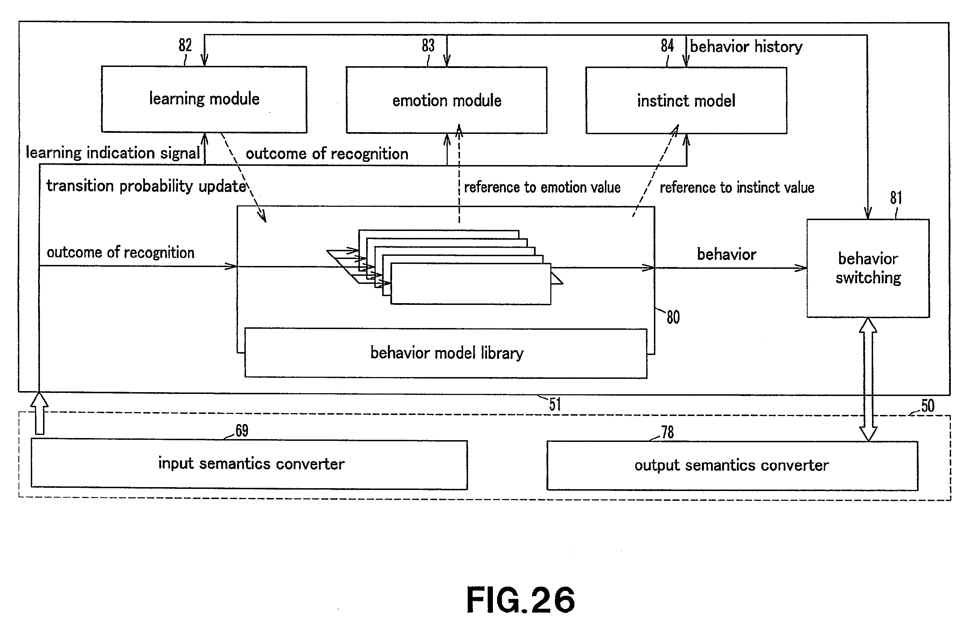

As shown in FIG. 26, the application layer 51 has five modules including a behavior model library 80, a behavior switching module 81, a learning module 82, an emotion model 83 and an instinct model 84.

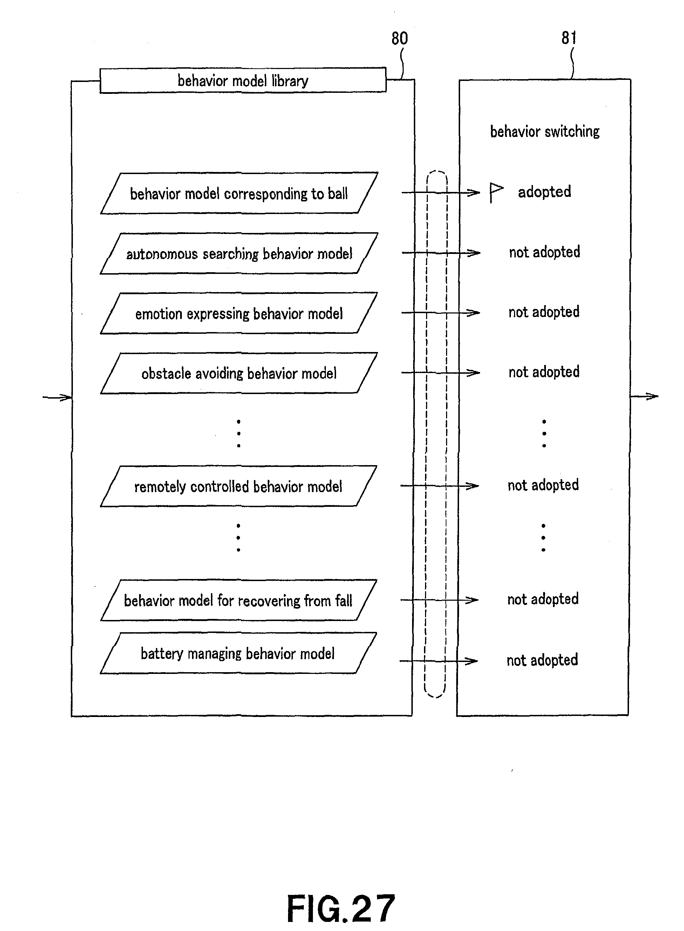

As shown in FIG. 27, the behavior model library 80 contains independent behavior models that correspond to a number of pre-selected conditions such as "The battery has little power remaining.", "Recover from a fall.", "When avoiding an obstacle.", "When expressing emotion." and "When a ball is detected.".

The behavior models are used to decide the succeeding behavior, referring, if necessary, to the parameter value of the corresponding emotion held in the emotion model 83 or the parameter value of the corresponding desire held in the instinct model 84 when the outcome of recognition is given from the input semantics converter module 69 or when a predetermined period of time has elapsed since the time when the outcome of recognition is given last time. Then, the outcome of the decision is output to the behavior switching module 81.

In this embodiment, each behavior model uses an algorithm that is called a finite probability automaton for the purpose of probabilistically determining the transition from one of the nodes (states) $NODE_0$ through $NODE_n$ to another of the nodes $NODE_0$ through $NODE_n$ on the basis of the transition probabilities $P_1$ through $P_n$ defined respectively for the arcs $ARC_1$ through $ARC_n$ that connect the nodes $NODE_0$ through $NODE_n$ when determining the next behavior.

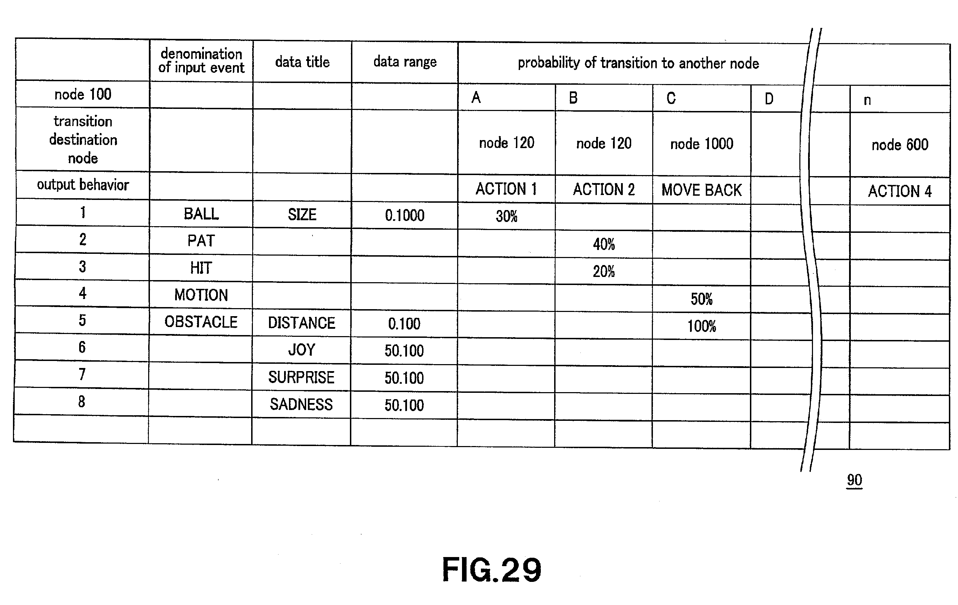

More specifically, each behavior model has a state transition table 90 as shown in FIG. 29 for each of the nodes $NODE_0$ through $NODE_n$ so as to correspond to each of the nodes $NODE_0$ through $NODE_n$ for forming their own behavior models.

In the state transition table 90, input events (outcome of recognition) that provide conditions for transition at nodes $NODE_0$ through $NODE_n$ are listed in the column of "denomination of input event" in the order of priority and additional conditions for the conditions for transition are listed on the corresponding rows in the columns of "data title" and "data range".

Thus, referring to FIG. 29, the conditions to be met for transition to take place from node $NODE_{100}$ to some other node include that, when the outcome of recognition that "A ball is detected (BALL)." is given, the "size (SIZE)" of the ball given with the outcome of recognition is between "0 and 1,000" and that, when the outcome of recognition that "An obstacle is detected (OBSTACLE)." is given, the "distance (DISTANCE) " to the obstacle given with the outcome of recognition is between "0 and 100".

When no outcome of recognition is input to node $NODE_{100}$, transition can take place to some other node when the parameter value of "joy", "surprise" or "sadness" held in the emotion model 83 out of the numerous parameter values of different emotions and different desires held in the emotion model 83 and the instinct model 84, which the behavior model refers to periodically, is found within a range between "50 and 100".

Additionally, the denominations of the nodes to which transition can take place from the indicated one of the nodes $NODE_0$ through $NODE_n$ are listed in the columns of "probability of transition to another node" and on the row of "transition destination node" of the state transition table 90, while the probability of transition to each of the applicable ones of the nodes $NODE_0$ through $NODE_n$ when all the conditions described in the columns of "denomination of input event", "data title" and "data range" are met is listed in the corresponding box in the columns of "probability of transition to another node" and the behavior to be output when transition to the node, which is one of the nodes $NODE_0$ through $NODE_n$, is described in the columns of "probability of transition to another node" and in the row of "output behavior". It will be appreciated that the sum of the probabilities in each row in the columns of "probability of transition to some other node" is equal to 100[%].

Thus, as for the node $NODE_{100}$ shown in the state transition table 90 of FIG. 29, for instance, transition to "node $NODE_{120}$ (node 120)" can take place with a probability of "30[%]" when the outcome of recognition that "A ball is detected (BALL)." and the "size (SIZE)" of the ball is within a range between "0 and 1,000" is given. Then, a behavior of "ACTION1" is output.

Each behavior model is so formed that a number of nodes selected from the nodes $NODE_0$ through $NODE_n$ as described in the state transition table 90 are linked to it. Therefore, when the outcome of recognition is given from the input semantics converter module 69, the next behavior to be taken is determined by means of the state transition table showing the related ones of the nodes $NODE_0$ through $NODE_n$ and the result of determination is output to the behavior switching module 81.

With the behavior switching module 81 illustrated in FIG. 27, the behavior output from the predetermined high priority behavior model is selected out of the behaviors output from the behavior models of the behavior model library 80 and a command for realizing the behavior (to be referred to as behavior command hereinafter) is transmitted to the output semantics converter module 78 of the middleware layer 50. In this embodiment, degrees of priority are assigned in the descending order of the behavior models listed in FIG. 27.

The behavior switching module 81 notifies the completion of the behavior to the learning module 82, the emotion model 83 and the instinct model 84 according to the behavior completion information given to it from the output semantics converter module 78 after the completion of the behavior.

On the other hand, the learning module 82 receives the outcome of recognition of the action given by the user such as "being beaten" or "being stroked" by the user as input out of the results of recognition given from the input semantics converter module 69.

Then, the learning module 82 alters the probability of transition of the corresponding behavior model in the behavior model library 70 so as to reduce the probability of exhibition of the behavior when the robot apparatus 1 is "beaten (scolded)" and raise the probability of exhibition of the behavior when the robot apparatus 1 is "stroked (praised)" according to the outcome of recognition and the notification from the behavior switching module 71.

On the other hand, the emotion model 83 holds parameters indicating the intensity of each of a total of six emotions including "joy", "sadness", "anger", "surprise", "disgust" and "fear". The emotion model 83 periodically updates the parameter values of the emotions according to each specific outcome of recognition such as "being beaten" or "being stroked" given from the input semantics converter module 69, the elapsed time and the notification from the behavior switching module 81.

More specifically, if the quantity of change of an emotion at a given time is ΔE[t] as computed by means of a predetermined formula, using the outcome of recognition given from the input semantics converter module 69, the behavior of the robot apparatus 1 at that time, the time elapsed since the last update, the current parameter value of the emotion is E[t] and the coefficient of sensitivity of the emotion is $k_e$, the emotion model 83 computes the parameter value E[t + 1] for the next period by means of formula (31) below and updates the parameter value by replacing the current parameter value E[t] of the emotion with the computed parameter value. The emotion model 83 updates the parameter values of all the emotions in a similar manner.

$$E = [t + 1] = E = [t] + ke \times \Delta E[t] \tag{31}$$

The extent to which each outcome of recognition and the notification from the output semantics converter module 78 influence the quantity of change of the parameter value ΔE[t] of each emotion is predetermined. For example, the outcome of recognition of "being beaten" influences the quantity of change of the parameter value ΔE[t] of the emotion of "anger" to a large extent and the outcome of recognition of "being stroked" influences the quantity of change of the parameter value ΔE[t] of the emotion of "joy" to a large extent.

The notification from the output semantics converter module 78 is so-called feedback information for a behavior (behavior completion information) or information telling the outcome of the exhibition of a behavior. The emotion model 83 also changes the emotion according to such information. For example, the level of the emotion of "anger" falls as a result of a behavior of "crying". The notification from the output semantics converter module 78 is also input to the above described learning module 82 and the learning module 82 alters the probability of transition that corresponds to the behavior model in question according to the notification.

The feedback of the outcome of a behavior may be given as an output (a behavior to which an emotion is added) of the behavior switching module 81.

On the other hand, the instinct model 84 holds parameters indicating the intensity of each of a total of four mutually independent desires including "exercise desire", "affection desire", "appetite" and "curiosity". The instinct model 84 periodically updates the parameter values of the desires according to each specific outcome of recognition given from the input semantics converter module 69, the elapsed time and the notification from the behavior switching module 81.

More specifically, as for the desires including "exercise desire", "affection desire" and "curiosity", if the quantity of change of a desire at a given time is ΔI[k] as computed by means of a predetermined formula, using the outcome of recognition, the elapsed time and the notification given from the output semantics converter module 78, the current parameter value of the desire is I[k] and the coefficient of sensitivity of the desire is $k_i$, the instinct model 84 computes the parameter value I[k + 1] for the next period by means of formula (32) below and updates the parameter value by replacing the current parameter value I[k] of the desire with the computed parameter value. The instinct model 84 updates the parameter values of all the emotions in a similar manner except "appetite".

$$I[k + 1] = I[k] + ki \times \Delta I[k] \tag{32}$$

The extent to which each outcome of recognition and the notification from the output semantics converter module 78 influence the quantity of change of the parameter value $\Delta I[k]$ of each emotion is predetermined. For example, the notification from the output semantics converter module 78 influences the quantity of change of the parameter value $\Delta I[k]$ of the emotion of "fatigue" to a large extent.

In this embodiment, the parameter value of each of the emotions and the desires (instincts) is made to change within a range between 0 and 100 and the value of each of the coefficients $k_e$ and $k_i$ is also defined for the corresponding emotion or desire.

On the other hand, the output semantics converter module 78 of the middleware layer 50 shown in FIG. 26 applies an abstract behavior command such as "move on", "be delighted", "whistle" or "track the ball" given from the above described behavior switching module 81 of the application layer 51 to the corresponding one of the signal processing modules 71 through 77 of the output system 79.

When a behavior command is give to the corresponding one of the signal processing modules 71 through 77, it generates a servo command value to be given to the corresponding actuator appropriate for the behavior, a sound data to be output from the speaker and/or a drive data to be given to the LEDs according to the behavior command and sequentially transmits the data to the corresponding actuator, the speaker and/or the LEDs by way of the virtual robot 43 of the robotic server object 42 and the signal processing circuit.

In this way, the robot apparatus 1 can autonomously behave in response to its own (internal) situation, the surrounding (external) situation and the instruction or the action give by the user according to the above described control program.

Such a control program is provided by means of a storage medium that records the control program in a format readable to the robot apparatus 1. Storage mediums that can be used for recording the control program include magnetic reading type storage mediums (e.g., magnetic tapes, flexible discs, magnetic cards), optical reading type storage mediums (e.g., CD-ROMs, MOs, CD-Rs, DVDs). Storage mediums that also include semiconductor memories (such as so-called memory cards (regardless of profile, which may be rectangular or square), IC cards). Additionally, the control program may be provided by way of the Inteinet.

The control program is then reproduced by means of a read-only driver or a personal computer and read into the robot apparatus 1 connected thereto by way of wires or wirelessly. When the robot apparatus 1 is equipped with a drive for a down-sized storage medium such as semiconductor memory or IC card, it can directly read in the control program from the storage medium.

The present invention is by no means limited to the embodiment described above by referring to the accompanying drawings. It may be obvious to those skilled in the art that the above described embodiment can be modified and/or altered in various different ways without departing from the scope of the invention.

Industrial Applicability

As described above in detail, according to the invention, it is possible to identify the current environment from a certain amount of information without recognizing all the landmarks in the environment. Additionally, as a result of defining identifiable unique environments and storing environment maps of the environments including one for environment A and environment B, for example, that are physically separated from each other, the volume of data necessary for each environment map is reduced and it is not necessary to be concerned about the relative positional relationship of environment A and environment B so that the present invention provides remarkable advantages if compared with a technique of expressing a single large environment by means of a single environment map model.

**Claims**

1. A robot apparatus adapted to move in an environment containing one or more than one landmarks located therein, the robot apparatus comprising:

   environment map building means for building an identifiable unique environment map by means of the location or the number of one or more than one landmarks according to the result of observation of the one or more than one landmarks and the movement/state quantity of the robot apparatus;
   environment map storage means for storing a plurality of environment maps as registered environment maps; and
   environment identifying means for determining if the current environment is identical with the environment indicated by the registered environment maps by comparing the registered environment maps stored in the environment map storage means and the current environment map built by the environment map building means.

2. An environment identifying apparatus to be used by a mobile body to identify the environment containing one or more than one landmarks located therein, while moving in the environment, the apparatus comprising:

   environment map building means for building an identifiable unique environment map by means of the location or the number of one or more than one landmarks according to the result of observation of the one or more than one landmarks and the movement/state quantity of the mobile body;
   environment map storage means for storing a plurality of environment maps as registered environment maps; and
   environment identifying means for determining if the current environment is identical with the environment indicated by the registered environment maps by comparing the registered environment maps stored in the environment map storage means and the current environment map built by the environment map building means.

3. The apparatus according to claim 2, wherein the registered environment maps are environment maps built by the environment map building means.

4. The apparatus according to claim 2, wherein the environment maps contain positional information on the landmarks and the environment map storage means stores environment identifying information for identifying the environments along with the environment maps.

5. The apparatus according to claim 4, wherein the environment identifying means computes the degree of similarity of the current environment map and each of the registered environment maps and identifies the current environment on the basis of the degrees of similarity.

6. The apparatus according to claim 5, wherein, when the degree of similarity between the current environment map and one of the registered environment maps is greater than a predetermined threshold value, the environment identifying means identifies the current environment as the environment shown on the registered environment map and outputs the environment identifying information of the registered environment map.

7. The apparatus according to claim 5, wherein the environment identifying means has an adding means for adding the current environment map to the environment map storage means when the degree of similarity between the current environment map and each and every one of the registered environment maps is smaller than a predetermined threshold value.

8. The apparatus according to claim 2, further comprising:

   exploring means for exploring the inside of the identifiable unique environment.

9. The apparatus according to claim 8, further comprising:

   end of exploration control means for controlling the exploring means so as to end the exploration in the inside of the environment.

10. The apparatus according to claim 9, wherein the end of exploration control means ends the exploration of the exploring means when a predetermined number of landmarks are observed in the identifiable unique environment, when a predetermined period of time has elapsed since the start of exploration or when an instruction is given by the user who controls the mobile body so as to end the exploration in the environment.

11. The apparatus according to claim 2, wherein the identifiable unique environment has a predetermined number of landmarks.

12. The apparatus according to claim 2, wherein the one or more than one landmarks are uniquely identifiable in the identifiable unique environment.

**13.** The apparatus according to claim 2, wherein the landmark or each of the more than one landmarks is formed by combing a plurality of geometrical patterns having different profiles and/or different colors.

**14.** The apparatus according to claim 13, wherein the environment map contains information on the direction of the landmark or each of the more than one landmarks along with information on the position of the landmark or each of the more than one landmarks.

**15.** The apparatus according to claim 2, wherein the movement/state quantity of the mobile body indicates the postural direction and the position of the mobile body.

**16.** The apparatus according to claim 2, wherein the mobile body is an autonomous type robot apparatus that behaves according to the input information supplied to it.

**17.** An environment identifying method to be used by a mobile body to identify the environment containing one or more than one landmarks located therein, while moving in the environment, the method comprising:

an environment map building step of building an identifiable unique environment map by means of the location or the number of one or more than one landmarks according to the result of observation of the one or more than one landmarks and the movement/state quantity of the mobile body; and

an environment identifying step of determining if the current environment is identical with the environment indicated by a plurality of registered environment maps stored in an environment map storage means as registered environment maps by comparing the registered environment maps and the current environment map built in the environment map building step.

**18.** The method according to claim 17, further comprising:

a storing step of storing the environment map built in the environment map building step in the storage means as registered environment map.

**19.** The method according to claim 17, wherein the environment maps contain positional information on the landmarks and the environment map storage means stores environment identifying information for identifying the environments along with the environment maps.

**20.** The method according to claim 19, wherein the degree of similarity of the current environment map and each of the registered environment maps is computed and the current environment is identified on the basis of the degrees of similarity in the environment identifying step.

**21.** The method according to claim 20, wherein, when the degree of similarity between the current environment map and one of the registered environment maps is greater than a predetermined threshold value, the current environment is identified as the environment shown on the registered environment map and the environment identifying information of the registered environment map is output in the environment identifying step.

**22.** The method according to claim 20, wherein, the current environment map is added to the environment map storage means when the degree of similarity between the current environment map and each and every one of the registered environment maps is smaller than a predetermined threshold value in the environment identifying step.

**23.** The method according to claim 17, further comprising:

an exploring step of exploring the inside of the identifiable unique environment.

**24.** The method according to claim 23, wherein the exploration in the exploration step is ended when a predetermined number of landmarks are observed in the identifiable unique environment, when a predetermined period of time has elapsed since the start of exploration or when an instruction is given by the user who controls the mobile body so as to end the exploration in the environment.

**25.** A program for causing a computer to execute an operation of driving a mobile body to move in an environment containing one or more than one landmarks located therein, while moving in the environment, and identify the environment, the program comprising:

an environment map building step of building an identifiable unique environment map by means of the location or the number of one or more than one landmarks according to the result of observation of the one or more than one landmarks and the movement/state quantity of the mobile body; and

an environment identifying step of determining if the current environment is identical with the environment indicated by a plurality of registered environment maps stored in an environment map storage means as registered environment maps by comparing the registered environment maps and the current environment map built in the environment map building step.

26. A storage medium storing a program for causing a computer to execute an operation of driving a mobile body to move in an environment containing one or more than one landmarks located therein, while moving in the environment, and identify the environment, the program comprising:

an environment map building step of building an identifiable unique environment map by means of the location or the number of one or more than one landmarks according to the result of observation of the one or more than one landmarks and the movement/state quantity of the mobile body; and

an environment identifying step of determining if the current environment is identical with the environment indicated by a plurality of registered environment maps stored in an environment map storage means as registered environment maps by comparing the registered environment maps and the current environment map built in the environment map building step.

**FIG.1**

# FIG.2

**FIG.3**

**FIG.4**

EP 1 541 295 A1

400

411

412

402

environment map
building section

413

$(\hat{l}r, \Sigma r)$

$(\hat{l}i, \Sigma i)$

405

environment exploring
section

404

environment identifying
section

414

ID

ambiguous

unknown

403

environment map
storage section

# FIG.5

FIG.6

EP 1 541 295 A1

**FIG.7A**

**FIG.7B**

EP 1 541 295 A1

FIG.8

```
                    ┌──────────────┐
                    │    START     │
                    └──────┬───────┘
                           │
          ┌────────────────▼─────────────────┐
          │      Observe landmarks or        │─S1
          │ detect movement/state quantity.  │
          └────────────────┬─────────────────┘
                           │
          ┌────────────────▼─────────────────┐
          │  Update environment map (l̂, Σ) of│─S2
          │  environment map building section.│
          └────────────────┬─────────────────┘
                           │                                    ┌──────────────┐
          ┌────────────────▼─────────────────┐  S3              │    START     │
          │ Select environment map with highest degree│◄──────► └──────┬───────┘
          │ of similarity from environment data base. │        406      │
          └────────────────┬─────────────────┘        ┌─────────┐      │
                           │                          │environment map,│ ┌───▼──────────────────────┐
                           │                          │environment map ID│ │Explore and observe all landmarks│─S9
                           │                          └─────────┘      └───┬──────────────────────┘
                           │                              │               │
                    S4     ▼              Yes         S6  ▼        Yes     │
          ◄────────◆ environment map ID ◆──────►◆ Exploring environment? ◆──────┐
                    ◆  = unknown?       ◆          ◆                      ◆      │
                           │                           │                        │
                           │ No                        │ No                     │
                           ▼                           ▼                        ▼
          ┌────────────────────────┐   ┌───────────────────────────┐  ┌──────────────────────┐
          │ Output environment map ID.│─S5│ Add new environment map   │─S7│ Output environment map ID│─S8
          │                        │   │and environment map ID to database.│ │ output immediately before.│
          └────────────┬───────────┘   └──────────┬────────────────┘  └──────────┬───────────┘
                       │                           │                             │
                ┌──────▼──────┐            ┌───────▼─────┐              ┌─────────▼───┐
                │    END      │            │    END      │              │    END      │
                └─────────────┘            └─────────────┘              └─────────────┘
```

# FIG.9

(1.5/1) — L

(1.5/−1)

(0/1)

1

(0/−1)

(−1.5/1)

(−1.5/−1)

# FIG.10

FIG.11

FIG.12

m →  F($l$,m) → + ○ → | → H($l$) → + ○ → → o

State Model

Observation Model

# FIG.13

EP 1 541 295 A1

START

Observe motion of
robot apparatus. — S11

Update position of
robot apparatus
$(\hat{l}r, \Sigma r)$
in environment map. — S12

END

**FIG.14A**

START

Observe landmark. — S13

New landmark? — S14

Yes

No

Add landmark
$(\hat{l}_{n+1}, \Sigma_{n+1})$
to environment map. — S15

Update landmark position
$(\hat{l}i, \Sigma i)$
in environment map. — S16

END

**FIG.14B**

EP 1 541 295 A1

L11₁ → $L11_1$ L12₁ $L12_1$ L12₂ $L12_2$ L11₂ $L11_2$ L12₃ $L12_3$ L11₃ $L11_3$

440

1000

500

1

0

-500

-1000

-1500  -1000  -500  0  500  1000  1500  (cm)

$L11_4$  $L12_4$  $L12_5$  $L11_5$  $L11_6$  $L12_6$

**FIG.15**

EP 1 541 295 A1

FIG.16

EP 1 541 295 A1

START
environment map($\hat{l}i$, $\Sigma i$)

**S21** Number of landmarks >min? — No

↓ Yes

**S22** Number of landmarks altered? — No

**S26** Landmark $\hat{l}i$, $\Sigma i$ altered? — No

↓ Yes

**S23** Select matching environment map. ← environment map data base (406)

**S24** A single environment map agrees with it? — No

↓ Yes

**S27** Number of environment maps agreeing with it? — No

↓ Yes

**S25** ID= Agreeing environment map ID

**S28** ID= ambiguous

**S29** ID= unknown

START
environment exploring apparatus

**S30** Exploration ended and last ID unknown? — No

↓ Yes

**S31** Add new ID. ← environment map data base

**S32** ID= New ID

**S33** ID= Last ID

ID output

**FIG.17**

| Environment | Environment Map | Environment ID | Environment Name |
|---|---|---|---|
| Env1 | $\mathrm{Map}_1(\widehat{l}, \Sigma)$ | 1 | Taro's Room |
| Env2 | $\mathrm{Map}_2(\widehat{l}, \Sigma)$ | 2 | Hanako'S Room |
| Env3 | $\mathrm{Map}_3(\widehat{l}, \Sigma)$ | 3 | W.C. |

**FIG.18**

EP 1 541 295 A1

L22

L23

L21

1

L20

# FIG.19

S101 Update image data and sensor data.

S102-1 Recognize temporal correspondence of image data and sensor data.

S102-2 Compute simultaneous transformation matrix to robot-centered coordinates.

S103 Update kinematics data and disparity image.

S104-1 Compute three-dimensional position data.

S104-2 Extract obstacles.

S105 Update odometry and obstacle information.

S106 Update occupancy grid.

S107 Update kinematics data and color image.

S108 Compute information on relative positions of color landmarks.

S109 Update information on relative positions of color landmarks and odometry.

S110 Compute absolute coordinates.

S111 Update occupancy grid and absolute coordinates.

S112 Determine behavior.

FIG.20

**FIG.21**

FIG.22

**FIG.23**

EP 1 541 295 A1

| 47 | | 51 | | 42 |
|---|---|---|---|---|

| | application layer | |
|---|---|---|

| object manager | | | designed robot |
|---|---|---|---|

48

50

| service manager | | middleware layer | | power manager |
|---|---|---|---|---|

49

44

| manager object | | device driver manager | virtual robot | | robotic server object |
|---|---|---|---|---|---|

45 43

46

| device driver set | — 41 |
|---|---|

| device driver layer | — 40 |
|---|---|

# FIG.24

**FIG.25**

EP 1 541 295 A1

FIG.26

80    81

| behavior model library | | behavior switching |

behavior model corresponding to ball → ⊳ adopted

autonomous searching behavior model → not adopted

emotion expressing behavior model → not adopted

obstacle avoiding behavior model → not adopted

⋮ ⋮

remotely controlled behavior model → not adopted

⋮ ⋮

behavior model for recovering from fall → not adopted

battery managing behavior model → not adopted

# FIG.27

**FIG.28**

EP 1 541 295 A1

| | denomination of input event | data title | data range | probability of transition to another node | | | | | |
|---|---|---|---|---|---|---|---|---|---|
| | | | | A | B | C | D | | n |
| node 100 | | | | | | | | | |
| transition destination node | | | | node 120 | node 120 | node 1000 | | | node 600 |
| output behavior | | | | ACTION 1 | ACTION 2 | MOVE BACK | | | ACTION 4 |
| 1 | BALL | SIZE | 0.1000 | 30% | | | | | |
| 2 | PAT | | | | 40% | | | | |
| 3 | HIT | | | | 20% | | | | |
| 4 | MOTION | | | | | 50% | | | |
| 5 | OBSTACLE | DISTANCE | 0.100 | | | 100% | | | |
| 6 | | JOY | 50.100 | | | | | | |
| 7 | | SURPRISE | 50.100 | | | | | | |
| 8 | | SADNESS | 50.100 | | | | | | |
| | | | | | | | | | |

90

# FIG.29

EP 1 541 295 A1

**INTERNATIONAL SEARCH REPORT**

| International application No. |
| --- |
| PCT/JP03/10651 |

**A. CLASSIFICATION OF SUBJECT MATTER**
Int.Cl$^7$  B25J5/00, B25J13/08, G05D1/02

According to International Patent Classification (IPC) or to both national classification and IPC

**B. FIELDS SEARCHED**

Minimum documentation searched (classification system followed by classification symbols)
Int.Cl$^7$  B25J5/00, B25J9/10, B25J13/00, G05D1/00

Documentation searched other than minimum documentation to the extent that such documents are included in the fields searched
Jitsuyo Shinan Koho          1926–1996    Toroku Jitsuyo Shinan Koho      1994–2003
Kokai Jitsuyo Shinan Koho    1971–2003    Jitsuyo Shinan Toroku Koho      1996–2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2000-99145 A  (Meidensha Corp.), 07 April, 2000 (07.04.00), Claims; Fig. 1 (Family: none) | 1-26 |
| Y | US 5363305 A  (NEC Research Institute, Inc.), 08 November, 1994 (08.11.94), Claims; all drawings & JP 4-227507 A | 1-26 |
| Y | JP 11-175151 A  (Fuji Electric Co., Ltd.), 02 July, 1999 (02.07.99), Par. Nos. [0002] to [0003] (Family: none) | 1-26 |

☐ Further documents are listed in the continuation of Box C.       ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 02 December, 2003 (02.12.03) | 16 December, 2003 (16.12.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)